# EUROPÄISCHE PATENTANMELDUNG

(11) **EP 4 016 812 A1**
(43) Veröffentlichungstag der Anmeldung: **22.06.2022**
(21) Anmeldenummer: 21215357.1
(22) Anmeldetag: 17.12.2021
(51) Int. Cl.: H02K 7/18, H02K 1/2791, H02K 1/18, H02K 1/14, H02K 21/22, H02K 15/02, H02K 15/03

(54) **VERFAHREN ZUR BEREITSTELLUNG EINES GENERATORS EINER WINDENERGIEANLAGE**

(30) Priorität: 18.12.2020 DE 102020134193
(71) Anmelder: Wobben Properties GmbH, 26607 Aurich (DE)
(72) Erfinder: Giengiel, Wojciech, Aurich (DE); Feith, Manuel, Esens (DE); Jöckel, Stephan, Kleinniedesheim (DE); Recktenwald, Andreas, Saarbrücken (DE); Muik, Tobias, Bensheim (DE); Fischer, Lars, Norden (DE)
(74) Vertreter: Eisenführ Speiser

(57) **Zusammenfassung**

Die Erfindung betrifft ein Verfahren zur Bereitstellung eines Generators (1) einer Windenergieanlage (100), Verfahren zur Montage eines Generators (1), ein Verfahren zur Wartung eines Generators (1) einer Windenergieanlage (100), eine Montagevorrichtung und eine Wartungsvorrichtung. Insbesondere betrifft die Erfindung ein Verfahren zur Bereitstellung eines Generators (1) einer Windenergieanlage (100), umfassend die Schritte: Bereitstellen eines Generatorringes (5) durch stirnseitiges Anordnen von Statorsegmenten (200) zu einem Statorring (202) und stirnseitiges Anordnen von Rotorsegmenten (300) zu einem Rotorring (302), wobei jeweils ein Statorsegment (200) umfangsseitig benachbart zu einem zugeordneten Rotorsegment (300) angeordnet wird, sodass mindestens zwei Generatorsegmente (10) jeweils umfassend ein Statorsegment (200) und ein Rotorsegment (300) ausgebildet werden, Einstellen eines Luftspaltes (12), insbesondere mit einer vordefinierten Dicke, zwischen dem Statorring (202) und dem Rotorring (302) und Fixieren des Statorsegments (200) und des Rotorsegments (300) eines jeden Generatorsegments.

## Beschreibung

Die Erfindung betrifft ein Verfahren zur Bereitstellung eines Generators einer Windenergieanlage, Verfahren zur Montage eines Generators, ein Verfahren zur Wartung eines Generators einer Windenergieanlage, eine Montagevorrichtung und eine Wartungsvorrichtung.

Windenergieanlagen sind grundsätzlich bekannt, sie erzeugen elektrische Leistung aus Wind. Moderne Windenergieanlagen betreffen in der Regel sogenannte Horizontalachsen-Windenergieanlagen, bei denen die Rotorachse im Wesentlichen horizontal angeordnet ist und die Rotorblätter eine im Wesentlichen senkrechte Rotorfläche überstreichen. Windenergieanlagen umfassen neben einem an einer Gondel angeordneten aerodynamischen Rotor einen Turm, auf dem die Gondel mit dem aerodynamischen Rotor um eine im Wesentlichen vertikal ausgerichtete Achse drehbar angeordnet ist.

Der aerodynamische Rotor wird im Betrieb der Windenergieanlage durch den Wind in eine Drehbewegung versetzt und dreht somit auch einen elektrodynamischen Rotor oder Läufer eines Generators, welcher direkt oder indirekt mit dem aerodynamischen Rotor gekoppelt ist. Der elektrische Generator ist in der Gondel angeordnet und erzeugt elektrische Energie.

Windenergieanlagen können getriebelos oder mit einem Getriebe ausgeführt sein. Insbesondere getriebelose Windenergieanlagen weisen Generatoren mit einem großen Durchmesser auf. Diese Generatoren können als sogenannte Innenläufer oder als sogenannte Außenläufer ausgeführt sein. Bei einem Innenläufer ist der sich mit dem aerodynamischen Rotor rotierende elektrische Rotor des Generators innerhalb eines feststehenden Stators des Generators angeordnet. Bei einem Außenläufer ist der elektrische Rotor außerhalb des Stators angeordnet. Derartige Generatoren können eine Gesamtmasse von über 150 Tonnen erreichen. Neben großen Abmessungen ist somit auch die Masse der Generatoren dafür verantwortlich, dass ein Transport des Generators mit einem hohen Aufwand verbunden ist. Daher werden segmentierte Generatoren eingesetzt, wobei der Rotor und/oder der Stator jeweils mehrere Bauteile aufweisen, die an dem Aufstellort der Windenergieanlage zusammengesetzt werden.

Das Zusammensetzen dieser trotz Segmentierung schweren Bauteile ist mit Herausforderungen verbunden. Einerseits ist das Bewegen der Bauteile auf der Baustelle schwierig und darüber hinaus ist das präzise Einstellen eines Luftspalts zwischen dem Rotor und dem Stator mit der erforderlichen Genauigkeit zeitaufwendig. Darüber hinaus ist die Wartungsmöglichkeit der bestehenden Lösungen eingeschränkt, sodass die Wartung häufig aufwendig und kostenintensiv ist.

Das Deutsche Patent- und Markenamt hat in der Prioritätsanmeldung zur vorliegenden Anmeldung folgenden Stand der Technik recherchiert: DE 10 2010 039 590 A1, DE 10 2014 208 375 A1, DE 10 2016 121 298 A1, EP 3 832 132 A1, DE 10 2004 028 746 A1.

Es ist daher eine Aufgabe der vorliegenden Erfindung, ein Verfahren zur Bereitstellung eines Generators einer Windenergieanlage, Verfahren zur Montage eines Generators, ein Verfahren zur Wartung eines Generators einer Windenergieanlage, eine Montagevorrichtung und eine Wartungsvorrichtung bereitzustellen, die einen oder mehrere der genannten Nachteile vermindern oder beseitigen. Insbesondere ist es eine Aufgabe der vorliegenden Erfindung, eine Lösung bereitzustellen, die die Fehlerwahrscheinlichkeit beim Aufbau einer Windenergieanlage und/oder den Aufwand bei dem Aufbau einer Windenergieanlage reduziert.

Gemäß einem ersten Aspekt wird diese Aufgabe gelöst durch ein Verfahren zur Bereitstellung eines Generators einer Windenergieanlage, umfassend die Schritte: Bereitstellen eines Generatorringes durch stirnseitiges Anordnen von Statorsegmenten zu einem Statorring und stirnseitiges Anordnen von Rotorsegmenten zu einem Rotorring, wobei jeweils ein Statorsegment umfangsseitig benachbart zu einem zugeordneten Rotorsegment angeordnet wird, sodass mindestens zwei Generatorsegmente jeweils umfassend ein Statorsegment und ein Rotorsegment ausgebildet werden, Einstellen eines Luftspaltes, insbesondere mit einer vordefinierten Dicke, zwischen dem Statorring und dem Rotorring und Fixieren des Statorsegments und des Rotorsegments eines jeden Generatorsegments, Demontage des Generatorringes derart, dass die Verbindung zwischen den Generatorsegmenten gelöst wird und die relative Position des Statorsegments zu dem zugeordneten Rotorsegment eines jeden Generatorsegments im Wesentlichen unverändert bleibt.

Der Statorring wird durch stirnseitiges Anordnen von Statorsegmenten ausgebildet. Der Statorring kann beispielsweise einen ringförmigen oder einen polygonalen Querschnitt aufweisen. Die Statorsegmente sind derart ausgebildet, dass diese bei stirnseitigem Aneinanderanordnen diesen Querschnitt ausbilden. Jedes Statorsegment weist vorzugsweise eine Innenumfangsfläche und eine Außenumfangsfläche auf. Die Innenumfangsflächen der aneinander angeordneten Statorsegmente bilden vorzugsweise die Innenumfangsfläche des Statorrings aus. Analog hierzu bilden vorzugsweise die Außenumfangsflächen der Statorsegmente die Außenumfangsfläche des Statorrings aus. Der Rotorring ist ebenfalls durch stirnseitiges Aneinanderanordnen von den Rotorsegmenten ausgebildet. Der Rotorring kann ebenfalls einen kreisförmigen oder einen polygonalen Querschnitt aufweisen.

Der Statorring und der Rotorring sind derart ausgebildet und dimensioniert, dass diese eine koaxiale Drehachse aufweisen können und insbesondere zwischen der Innenumfangsfläche des Statorrings und der Außenumfangsfläche des Rotorrings ein einstellbarer Luftspalt besteht oder, dass die Außenumfangsfläche des Statorrings der Innenumfangsfläche des Rotorrings zugewandt ist und sich zwischen diesen ein Luftspalt einstellt. Wenn der Rotorring innerhalb des Statorrings angeordnet ist, wird dieser Generator auch als Innenläufer bezeichnet. Wenn der Statorring innerhalb des Rotorrings angeordnet ist, wird dieser auch als Außenläufer bezeichnet.

Der Generatorring umfasst mindestens zwei Generatorsegmente. Jedes Generatorsegment umfasst ein Statorsegment und ein Rotorsegment. Ein Generatorsegment kann auch zwei Statorsegmente und ein Rotorsegment und/oder zwei Rotorsegmente und ein Statorsegment aufweisen.

Der Luftspalt wird insbesondere durch die Beabstandung des Statorrings von dem Rotorring beschrieben. Diese Beabstandung wird auch als Dicke des Luftspaltes bezeichnet. Insbesondere wird diese Dicke in orthogonaler Richtung der Innenumfangsfläche zur Außenumfangsfläche des Statorrings und/oder des Rotorrings beschrieben. Nachdem der Luftspalt des Generatorringes eingestellt ist, wird das Statorsegment relativ zu dem Rotorsegment eines jeden Generatorsegments fixiert. Das Fixieren umfasst insbesondere Maßnahmen, die dazu führen, dass die Beabstandung des Statorsegments relativ zu dem Rotorsegment im Wesentlichen unveränderbar ist.

Der Transport eines solchen Generatorringes ist in der Regel jedoch aufgrund des Gewichts von in der Regel über 150 Tonnen und/oder aufgrund der Abmessungen nicht möglich. Aufgrund dessen wird der Generatorring wieder demontiert. Die Demontage des Generatorringes erfolgt durch das Lösen der Verbindung zwischen den Generatorsegmenten. Das Lösen der Verbindung zwischen den Generatorsegmenten hat im Wesentlichen keinen Einfluss auf die relative Position des Statorsegments zu dem zugeordneten Rotorsegment eines jeden Generatorsegments. Dies bedeutet insbesondere, dass bei der Demontage zwei oder mehr separate Generatorsegmente ausgebildet werden. Jedes Generatorsegment umfasst ein Statorsegment und ein zugeordnetes Rotorsegment. Die beim Einstellen des Luftspaltes eingestellte Position des Statorsegments relativ zu dem Rotorsegment wird im Wesentlichen nicht verändert.

Durch das Bereitstellen von separaten Rotorsegmenten mit jeweils einem Statorsegment und einem zugeordneten Rotorsegment, zwischen denen sich ein Luftspalt einstellt, wird es ermöglicht, dass die Generatorsegmente separat zum Aufstellort der Windenergieanlage transportiert werden und dort wieder zu einem Generatorring zusammengesetzt werden. Die Montage kann entweder ebenerdig oder an der Gondel der Windenergieanlage erfolgen. Ein Einstellen des Luftspaltes ist am Aufstellort der Windenergieanlage im Wesentlichen nicht erforderlich. Dieses Einstellen des Luftspaltes ist bereits in der Montage des Generators erfolgt und somit kann durch das Aneinanderanordnen der Generatorsegmente mit eingestelltem Luftspalt die Einstellung des Luftspalts am montierten Generatorring vermieden oder der Aufwand hierfür reduziert werden.

Der Erfindung liegt die Erkenntnis zugrunde, dass durch das Voreinstellen eines Luftspalts in der Montage eines Generators und das nachträgliche Auseinandernehmen des Generators, wobei Generatorsegmente mit relativ zueinander fixierten Statorsegmenten und Rotorsegmenten entstehen, der Montageaufwand am Aufstellort der Windenergieanlage reduziert werden kann. Darüber hinaus ist das Einstellen des Luftspalts mit einer höheren Genauigkeit möglich.

In einer bevorzugten Ausführungsvariante des Verfahrens ist vorgesehen, dass das Statorsegment einen Stator-Segmentträger mit einer teilringförmigen Geometrie und einer Stator-Umfangsfläche, insbesondere einer Stator-Außenumfangsfläche, umfasst, wobei mindestens zwei Spuleneinheiten an der Stator-Umfangsfläche, insbesondere an der Stator-Außenumfangsfläche, angeordnet sind, wobei die Spuleneinheiten jeweils eine Spulenträgerplatte und mindestens eine auf der Spulenträgerplatte angeordnete Spule aufweisen.

Der Stator-Segmentträger weist die teilringförmige Geometrie auf. Teilringförmig bedeutet insbesondere, dass dies ein Teil, bzw. ein Abschnitt einer ringförmigen Geometrie ist. Beispielsweise kann die teilringförmige Geometrie des Stator-Segmentträgers eine Umfangserstreckung von 30 Bogengrad aufweisen. Durch die teilringförmige Geometrie weist der Stator-Segmentträger mindestens eine Stator-Umfangsfläche auf. Insbesondere kann der Stator-Segmentträger eine Stator-Außenumfangsfläche und/oder eine Stator-Innenumfangsfläche aufweisen.

Die Umfangsflächen werden in der Regel durch die teilringförmige Geometrie ausgebildet. Unter einer teilringförmigen Geometrie ist neben der Geometrie eines Abschnitts eines Ringes auch eine Geometrie eines teilringähnlichen Abschnitts zu verstehen. Beispielsweise kann der Querschnitt des segmentierten Statorrings auch polygonförmig ausgebildet sein. Hierfür kann beispielsweise der Stator-Segmentträger eine ebene Außenfläche aufweisen und derart ausgebildet sein, dass durch die Anordnung an weiteren Stator-Segmentträgern eine polygonale Geometrie des Stators ausgebildet wird. Eine solche soll auch unter einer ringförmigen bzw. teilringförmigen Geometrie verstanden werden. Unter der Stator-Umfangsfläche ist insbesondere eine radiale Umfangsfläche zu verstehen. Darüber hinaus kann hierunter auch eine axiale Umfangsfläche verstanden werden.

Es ist insbesondere bevorzugt, dass der Stator-Segmentträger an einer Stator-Trageinheit angeordnet ist, die ausgebildet ist, um das Statorsegment mit einem Statorgrundkörper zu verbinden, vorzugsweise schweißtechnisch zu verbinden, wobei vorzugsweise die Statortrageinheit eine Gitterstruktur umfasst, oder als eine solche ausgebildet ist.

Darüber hinaus ist es bevorzugt, dass an dem Stator-Segmentträger zwischen zwei und vier, insbesondere drei, Spuleneinheiten angeordnet sind. Insbesondere ist es bevorzugt, dass mindestens eine der Spulen als eine Zahnspule ausgebildet ist, wobei vorzugsweise die Zahnspule Aluminium umfasst oder aus Aluminium besteht. Um das Gewicht des Statorsegments und somit auch des Generatorringes zu verringern, weist der Stator-Segmentträger Durchbrüche auf, wobei vorzugsweise der Stator-Segmentträger eine Gitterstruktur aufweist.

Das Rotorsegment umfasst vorzugsweise einen Rotor-Segmentträger mit einer Rotor-Umfangsfläche, insbesondere einer Rotor-Innenumfangsfläche, und eine Vielzahl an Magneteinheiten, die an der Rotor-Umfangsfläche, insbesondere an der Rotor-Innenumfangsfläche, des Rotor-Segmentträgers angeordnet sind. Die im Vorherigen genannten Eigenschaften des Statorsegments gelten mit den erforderlichen Änderungen ebenfalls für das im Vorherigen beschriebene Rotorsegment.

Es ist insbesondere bevorzugt, dass der Rotor-Segmentträger an einer Rotortrageinheit angeordnet ist, die ausgebildet ist, um das Rotorsegment mit einem Rotorgrundkörper zu verbinden, vorzugsweise schweißtechnisch zu verbinden, wobei vorzugsweise die Rotortrageinheit als eine Gitterstruktur ausgebildet ist. Darüber hinaus ist es bevorzugt, dass die Rotor-Umfangsfläche des Rotor-Segmentträgers als eine im Wesentlichen geschlossene Fläche ausgebildet ist.

Es ist bevorzugt, dass sich die Rotor-Umfangsfläche in einer Umfangsrichtung und einer axialen Richtung erstreckt, wobei mindestens zwei Magneteinheiten in axialer Richtung benachbart zueinander angeordnet sind. in einer weiteren bevorzugten Fortbildung ist vorgesehen, dass eine, zwei, mehrere oder alle der Magneteinheiten als Permanentmagnet und/oder als Elektromagnet ausgebildet sind und/oder wobei eine, zwei oder mehrere der Magneteinheiten ein magnetisierbares Material umfassen oder aus diesem bestehen.

Eine bevorzugte Fortbildung des Verfahrens zeichnet sich dadurch aus, dass dieses den Schritt umfasst: Anordnen von Passstiften zum Fixieren der Statorsegmente und der Rotorsegmente eines jeden Generatorsegments.

In einer weiteren bevorzugten Fortbildung des Verfahrens umfasst dieses den Schritt: Bereitstellen einer Montagevorrichtung, Anordnen von mindestens zwei Generatorsegmenten an der Montagevorrichtung und Verbinden der Generatorsegmente. Die Montagevorrichtung ist insbesondere zur Anordnung von mindestens zwei Generatorsegmenten ausgebildet. Vorzugsweise werden die mindestens zwei Generatorsegmente an der Montagevorrichtung derart angeordnet, dass diese in vorteilhafterweise miteinander verbunden werden können.

Insbesondere ist es bevorzugt, dass die Montagevorrichtung eine im Wesentlichen kreisförmige Montagefläche und mindestens einen umfangsseitig an der Montagefläche angeordneten Montageanschlag zum Anlegen eines Generatorsegments aufweist, und das Verfahren den Schritt umfasst: Anordnen eines Generatorsegments an dem Montageanschlag.

Die Montagevorrichtung kann eine Grundplatte umfassen, deren Geometrie beliebig ist. Beispielsweise kann die Grundplatte kreisförmig, viereckig oder polygon ausgebildet sein. Die Montagevorrichtung umfasst jedoch die im Wesentlichen kreisförmige Montagefläche, die beispielsweise durch die Grundplatte ausgebildet sein kann. Der Anschlag der Montagevorrichtung weist vorzugsweise eine vertikal stehende Anschlagfläche auf, an der eines der Generatorsegmente angeordnet wird. Durch das Anordnen des Generatorsegments an dem Montageanschlag, insbesondere an der Anschlagfläche, wird dieses in seiner Position, insbesondere in seiner radialen Position, fixiert. Die Anschlagfläche des Montageanschlags weist vorzugsweise eine Flächenorthogonale auf, die parallel zur radialen Erstreckung der Montagefläche ausgerichtet ist.

In einer bevorzugten Fortbildung des Verfahrens ist vorgesehen, dass die Anzahl der Montageanschläge der Montagevorrichtung der Anzahl an anzuordnenden Generatorsegmenten entspricht und bei der Anordnung der Generatorsegmente jedes Generatorsegment an einem Montageanschlag anliegt, und umfassend den Schritt: Anordnen der Generatorsegmente jeweils an einem Montageanschlag.

Durch das Anordnen jedes Generatorsegments an jeweils einem Montageanschlag wird eine sichere Positionierung der Generatorsegmente ermöglicht. Dies erleichtert die Montage und auch die anschließende Einstellung des Luftspalts.

In einer bevorzugten Ausführungsvariante des Verfahrens umfasst dieses die Schritte: Anordnen einer Statorbasisstruktur und Verbinden der Statorbasisstruktur mit den Statorsegmenten, und/oder Anordnen einer Rotorbasisstruktur und Verbinden der Rotorbasisstruktur mit den Rotorsegmenten.

Die Statorbasisstruktur und/oder die Rotorbasisstruktur wird bzw. werden vorzugsweise in einem radial innenliegenden Bereich des Generatorringes angeordnet. Die Statorbasisstruktur ist insbesondere derart ausgebildet, dass diese zur Kopplung der Statorsegmente bzw. des Statorrings mit einem Maschinengestell einer Windenergieanlage ausgebildet ist. Die Rotorbasisstruktur ist insbesondere angeordnet und ausgebildet, um die Rotorsegmente bzw. den Rotorring mit einem aerodynamischen Rotor einer Windenergieanlage zu koppeln.

In einer weiteren bevorzugten Fortbildung ist vorgesehen, dass die Statorbasisstruktur einen Statorgrundkörper und/oder eine Statortrageinheit umfasst, wobei vorzugsweise der Statorgrundkörper Ringschreiben-förmig ausgebildet ist und/oder in Umfangsrichtung segmentiert ist, und/oder die Statortrageinheit eine Gitterstruktur aufweist, und/oder die Rotorbasisstruktur einen Rotorgrundkörper und/oder eine Rotortrageinheit umfasst, wobei vorzugsweise der Rotorgrundkörper Ringschreiben-förmig ausgebildet ist und/oder in Umfangsrichtung segmentiert ist, und/oder die Rotortrageinheit eine Gitterstruktur aufweist.

Der Statorgrundkörper ist vorzugsweise zur Kopplung mit dem Maschinengestell oder einem anderen feststehenden Abschnitt der Gondel ausgebildet. Die Statortrageinheit ist vorzugsweise zwischen dem Statorgrundkörper und einem Statorsegment angeordnet. Vorzugsweise umfasst die Statorbasisstruktur die gleiche Anzahl an Statortrageinheiten wie an Statorsegmenten. Die Statortrageinheiten können beispielsweise umfangsseitig an dem Statorgrundkörper angeordnet sein und sich jeweils bis zu einem zugeordneten Statorsegment erstrecken.

Der Rotorgrundkörper ist vorzugsweise unmittelbar oder mittelbar mit dem aerodynamischen Rotor gekoppelt. Die Rotortrageinheit erstreckt sich vorzugsweise zwischen dem Rotorgrundkörper und einem oder mehreren oder allen Rotorsegmenten. Es ist bevorzugt, dass die gleiche Anzahl an Rotortrageinheiten wie an Rotorsegmenten vorgesehen ist. Die Rotortrageinheiten erstrecken sich vorzugsweise jeweils vom Rotorgrundkörper hin zu einem zugeordneten Rotorsegment.

In einer weiteren bevorzugten Fortbildung des Verfahrens ist vorgesehen, dass dieses den Schritt umfasst: Koppeln der Statorbasisstruktur und/oder der Rotorbasisstruktur mit einer Lagereinheit, sodass die Statorbasisstruktur und die Rotorbasisstruktur relativ zueinander drehbar sind.

Die Lagereinheit kann beispielsweise einen ersten Lagerring und einen rotatorisch hierzu gelagerten zweiten Lagerring aufweisen, wobei der erste Lagerring einen Statorflansch aufweist, der mit dem Statorring, insbesondere mit der Statorbasisstruktur, vorzugsweise mit dem Statorgrundkörper, gekoppelt ist. Der zweite Lagerring weist vorzugsweise einen Rotorflansch auf. An dem zweiten Lagerring, insbesondere an dem Rotorflansch, kann beispielsweise der Rotorring, insbesondere die Rotorbasisstruktur, vorzugsweise der Rotorgrundkörper, angeordnet sein. Aufgrund dieser Anordnung ist der Statorring relativ zu dem Rotorring drehbar gelagert.

Darüber hinaus ist es bevorzugt, dass das Verfahren den Schritt umfasst: Fixieren des Statorrings relativ zu dem Rotorring, insbesondere in radialer Richtung, durch Anordnen von mindestens drei Hydraulikkissen in dem Luftspalt. Durch das Anordnen der mindestens drei Hydraulikkissen kann der Luftspalt konstant gehalten werden.

Gemäß einem weiteren Aspekt wird die eingangs genannte Aufgabe gelöst durch ein Verfahren zur Montage eines Generators einer Windenergieanlage, umfassend die Schritte: Bereitstellen eines Generators mit einem Statorring und einem Rotorring mit einem sich zwischen dem Statorring und dem Rotorring einstellenden Luftspalt, Fixieren des Statorrings relativ zu dem Rotorring durch Anordnen von mindestens drei Hydraulikkissen in dem Luftspalt, Koppeln des Statorrings mit einer Tragstruktur einer Windenergieanlage und Koppeln des Rotorrings mit einem aerodynamischen Rotor der Windenergieanlage, und Entfernen der Hydraulikkissen.

Gemäß einem weiteren Aspekt wird die eingangs genannte Aufgabe gelöst durch ein Verfahren zur Montage eines Generators an einer Gondel einer Windenergieanlage, umfassend die Schritte: Bereitstellen eines Statorrings und eines Rotorrings zwischen denen sich bei bestimmungsgemäßer Anordnung ein Luftspalt einstellt, wobei der Rotorring im Wesentlichen unmagnetisierte Magneteinheiten umfasst, Anordnen des Statorrings und des Rotorrings an der Gondel, wobei vorzugsweise der Statorring und der Rotorring koaxial angeordnet werden, ferner vorzugsweise an einem Lager angeordnet werden, und Magnetisierung der Magneteinheiten.

Gemäß einem weiteren Aspekt wird die eingangs genannte Aufgabe gelöst durch ein Verfahren zur Wartung eines Generators einer Windenergieanlage, umfassend die Schritte: Bereitstellen einer Wartungsvorrichtung zum Bewegen einer Generatorkomponente, insbesondere einer Spuleneinheit und/oder einer Magneteinheit, Kopplung der Wartungsvorrichtung mit der Generatorkomponente, wobei die Wartungsvorrichtung die Generatorkomponente durch eine Wartungsöffnung an einem Generatoraußenring, beispielsweise einem Statorring oder einem Rotorring, erreicht, Lösen und Bewegen der Generatorkomponente durch die Wartungsöffnung hindurch mittels der Wartungsvorrichtung.

Gemäß einem weiteren Aspekt wird die eingangs genannte Aufgabe gelöst durch eine Montagevorrichtung zur Montage von Generatorsegmenten, umfassend eine Basiseinheit mit einer kreisförmigen Montagefläche, mindestens einen umfangsseitig an der Montagefläche angeordneten Montageanschlag zum Anlegen eines Generatorsegments, wobei vorzugsweise mindestens zwei, insbesondere 12, Montageanschläge umfangsseitig an der Montagefläche angeordnet sind.

Gemäß einem weiteren Aspekt wird die eingangs genannte Aufgabe gelöst durch eine Wartungsvorrichtung zum Austausch einer Spuleneinheit an einem Statorsegment und/oder einer Magneteinheit an einem Rotorsegment, umfassend eine an einem Grundgestell angeordnete Bewegungseinheit, wobei die Bewegungseinheit eine Antriebseinheit aufweist, wobei die Antriebseinheit eingerichtet ist, die Bewegungseinheit relativ zu dem Grundgestellt zu bewegen, eine an der Bewegungseinheit angeordnete Koppeleinheit, die eingerichtet ist, durch eine Wartungsöffnung in dem Statorsegment und/oder in dem Rotorsegment hindurchzureichen und die zur Kopplung mit der Spuleneinheit und/oder der Magneteinheit eingerichtet ist, wobei die Koppeleinheit und die Bewegungseinheit derart eingerichtet sind, die Spuleneinheit und/oder die Magneteinheit durch die Wartungsöffnung hindurch zu bewegen.

Für weitere Vorteile, Ausführungsvarianten und Ausführungsdetails der weiteren Aspekte und ihrer möglichen Fortbildungen wird auch auf die zuvor erfolgte Beschreibung zu den entsprechenden Merkmalen und Fortbildungen des Verfahrens zur Bereitstellung eines Generators verwiesen.

Bevorzugte Beispiele werden exemplarisch anhand der beiliegenden Figuren erläutert. Es zeigen:
- Figur 1:: eine schematische, dreidimensionale Ansicht einer beispielhaften Ausführungsform einer Windenergieanlage;
- Figur 2:: eine schematische Ansicht eines Verfahrens zur Bereitstellung eines Generators;
- Figur 3:: eine Variante des in Figur 2 gezeigten Verfahrens;
- Figur 4:: eine weitere Variante des in Figur 2 gezeigten Verfahrens;
- Figur 5:: eine schematische Darstellung eines Verfahrens zur Montage eines Generators;
- Figur 6:: eine schematische Darstellung eines Verfahrens zur Montage eines Generators;
- Figur 7:: eine schematische Darstellung eines Verfahrens zur Wartung eines Generators;
- Figur 8:: eine schematische, dreidimensionale Ansicht einer beispielhaften Ausführungsform eines Generators;
- Figur 9:: eine schematische, dreidimensionale Detailansicht des in Figur 8 gezeigten Generators;
- Figur 10:: eine schematische, dreidimensionale Ansicht einer beispielhaften Ausführungsform eines Generatorsegments;
- Figur 11:: eine weitere dreidimensionale, schematische Ansicht des in Figur 10 gezeigten Generatorsegments;
- Figur 12:: eine schematische, dreidimensionale Ansicht einer beispielhaften Ausführungsform eines Statorsegments;
- Figur 13:: eine schematische, dreidimensionale Detailansicht des in Figur 12 gezeigten Statorsegments;
- Figur 14:: eine schematische, dreidimensionale Ansicht eines Stator-Segmentträgers;
- Figur 15:: eine schematische, dreidimensionale Ansicht einer beispielhaften Ausführungsform einer Spuleneinheit;
- Figur 16:: eine schematische, dreidimensionale Ansicht einer beispielhaften Ausführungsform einer Spule;
- Figur 17:: eine schematische, dreidimensionale Ansicht einer beispielhaften Ausführungsform eines Statorgrundkörpers;
- Figur 18:: eine schematische, dreidimensionale Ansicht einer beispielhaften Ausführungsform eines Rotorsegments;
- Figur 19:: eine schematische, dreidimensionale Detailansicht des in Figur 18 gezeigten Rotorsegments;
- Figur 20:: eine schematische, dreidimensionale Ansicht einer beispielhaften Ausführungsform eines Rotor-Segmentträgers;
- Figur 21:: eine schematische, dreidimensionale Ansicht einer beispielhaften Ausführungsform einer Magneteinheit;
- Figur 22:: eine schematische, dreidimensionale Ansicht einer beispielhaften Ausführungsform eines Rotorgrundkörpers;
- Figur 23:: eine schematische Ansicht einer beispielhaften Ausführungsform eines Lagers;
- Figur 24:: eine schematische Darstellung einer beispielhaften Ausführungsform einer Montagevorrichtung;
- Figur 25:: eine schematische, dreidimensionale Ansicht einer beispielhaften Ausführungsform eines Generatorringes;
- Figur 26:: eine schematische, dreidimensionale Ansicht eines in der Montagevorrichtung angeordneten Generators;
- Figur 27:: eine schematische Explosionszeichnung von Komponenten einer beispielhaften Ausführungsform eines Rotorringes;
- Figur 28:: eine schematische, dreidimensionale Ansicht einer beispielhaften Ausführungsform einer Versteifungseinheit;
- Figur 29:: eine schematische Explosionszeichnung von Komponenten einer beispielhaften Ausführungsform eines Statorringes;
- Figur 30:: eine schematische Anordnung einer Wartungsvorrichtung an einem Rotorsegment;
- Figur 31:: eine schematische, dreidimensionale Ansicht einer beispielhaften Ausführungsform einer Wartungsvorrichtung; und
- Figur 32:: eine schematische, zweidimensionale Ansicht der in Figur 31 gezeigten Wartungsvorrichtung.

In den Figuren sind gleiche oder im Wesentlichen funktionsgleiche bzw. -ähnliche Elemente mit den gleichen Bezugszeichen bezeichnet.

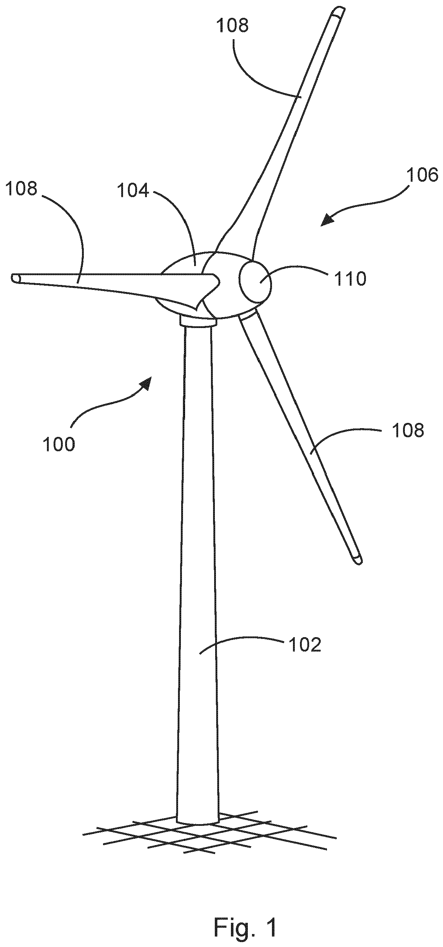

Figur 1 zeigt eine schematische, dreidimensionale Ansicht einer beispielhaften Ausführungsform einer Windenergieanlage 100. Die Windenergieanlage 100 weist einen Turm 102 und eine Gondel 104 auf dem Turm 102 auf. An der Gondel 104 ist ein aerodynamischer Rotor 106 mit Rotorblättern 108 und einem Spinner 110 vorgesehen. Der aerodynamische Rotor 106 wird im Betrieb der Windenergieanlage 100 durch den Wind in eine Drehbewegung versetzt und dreht somit auch einen elektrodynamischen Rotor oder einen Läufer eines Generators, welcher direkt oder indirekt mit dem aerodynamischen Rotor 106 gekoppelt ist. Der elektrodynamische Rotor des Generators wird auch als Rotor bezeichnet. Der aerodynamische Rotor 106 mit seinen Rotorblättern 108 wird durchweg als aerodynamischer Rotor bezeichnet.

Der im Inneren der Gondel 104 bereitgestellte Rotor wurde durch das im Folgenden beschriebene Verfahren bereitgestellt. Hierfür wurde zunächst ein Generatorring 5 bereitgestellt. Dieses Bereitstellen des Generatorringes 5 erfolgte unter anderem durch stirnseitiges Anordnen von Statorsegmenten 200 zu einem Statorring 202 und durch stirnseitiges Anordnen von Rotorsegmenten 300 zu einem Rotorring 302, wobei jeweils ein Statorsegment 200 umfangsseitig benachbart zu einem zugeordneten Rotorsegment 300 angeordnet wird, sodass mindestens zwei Generatorsegmente 10 jeweils umfassend ein Statorsegment 200 und ein Rotorsegment 300 ausgebildet werden.

Danach wurde ein Luftspalt 12, insbesondere mit einer vordefinierten Dicke, zwischen dem Statorring 202 und dem Rotorring 302 eingestellt. Daraufhin folgte ein Fixieren des Statorsegments 200 und des Rotorsegments 300 eines jeden Generatorsegments 10. Anschließend wurde der Generatorring derart demontiert, dass die Verbindung zwischen den Generatorsegmenten 10 gelöst wird und die relative Position des Statorsegments 200 zu dem zugeordneten Rotorsegment 300 eines jeden Generatorsegments 10 im Wesentlichen unverändert bleibt.

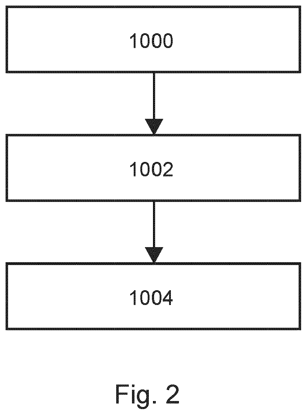

Figur 2 zeigt eine schematische Ansicht eines Verfahrens zur Bereitstellung eines Generators. In Schritt 1000 wird zunächst ein Generatorring 5 durch stirnseitiges Anordnen von Statorsegmenten 200 zu einem Statorring 202 und durch stirnseitiges Anordnen von Rotorsegmenten 300 zu einem Rotorring 302 bereitgestellt. Die Statorsegmente 200 sind umfangsseitig benachbart zu einem zugeordneten Rotorsegment 300 angeordnet. Vorzugsweise haben das Statorsegment 200 und das Rotorsegment 300 die gleiche Umfangserstreckung, beispielsweise 30°.

In Schritt 1002 wird ein Luftspalt 12 eingestellt. Dieser Luftspalt 12 weist insbesondere eine vordefinierte Dicke auf, wobei die Dicke die Beabstandung von dem Statorring 202 zu dem Rotorring 302 ist. Insbesondere ist die Dicke die Beabstandung einer Umfangsfläche des Statorrings 202, die dem Rotorring 302 zugewandt ist, zu einer Umfangsfläche des Rotorrings 302, die dem Statorring 202 zugewandt ist. Nach dem Einstellen des Luftspalts 12 erfolgt das Fixieren des Statorsegments 200 und des Rotorsegments 300 eines jeden Generatorsegments 10. Dies bedeutet insbesondere, dass das Statorsegment 200 relativ zu dem Rotorsegment 300 im Wesentlichen nicht bewegbar ist, sodass der Luftspalt 12 zwischen diesem Statorsegment 200 und diesem Rotorsegment 300 im Wesentlichen konstant bleibt.

In Schritt 1004 erfolgt eine Demontage des Generatorrings 5 derart, dass die Verbindung zwischen den Generatorsegmenten 10 gelöst wird und die relative Position des Statorsegments 200 zu dem zugeordneten Rotorsegment 300 eines jeden Generatorsegments 10 im Wesentlichen unverändert bleibt.

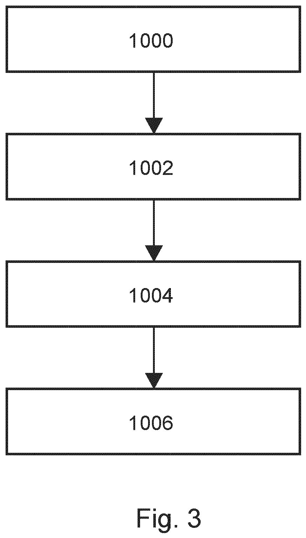

Die in Figur 3 gezeigte Abwandlung des Verfahrens umfasst in Schritt 1006 das Bereitstellen einer Montagevorrichtung 400, wobei mindestens zwei Generatorsegmente 10 an der Montagevorrichtung 400 angeordnet werden und die Generatorsegmente 10 miteinander verbunden werden. Insbesondere ist es bevorzugt, dass die Montagevorrichtung 400 eine im Wesentlichen kreisförmige Montagefläche 402 und mindestens einen umfangsseitig an der Montagefläche 402 angeordneten Montageanschlag 406 umfasst. Vorzugsweise wird jedes anzuordnende Generatorsegment 10 an einem zugeordneten Montageanschlag 406 angeordnet.

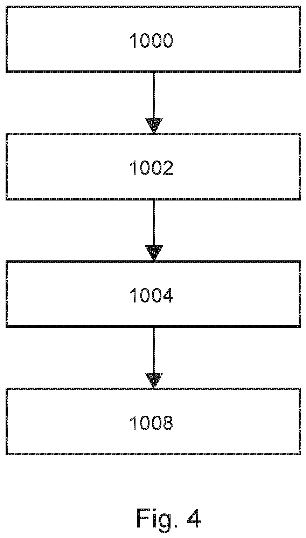

Die in Figur 4 gezeigte Variante des Verfahrens umfasst den Schritt 1008, in dem mindestens drei Hydraulikkissen in dem Luftspalt 12 angeordnet werden. Durch die Hydraulikkissen in dem Luftspalt 12 wird der Statorring 202 relativ zu dem Rotorring 302 fixiert.

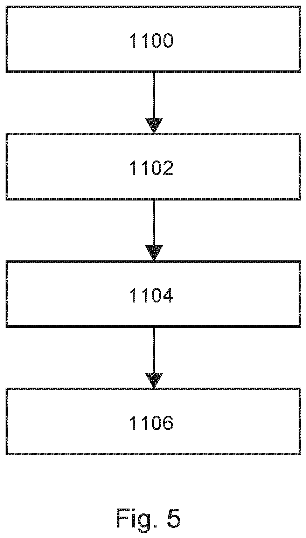

Figur 5 zeigt eine schematische Darstellung eines Verfahrens zur Montage eines Generators 1. Im Schritt 1100 wird ein Generator 1 mit einem Statorring 202 und einem Rotorring 302 mit einem sich zwischen dem Statorring 202 und dem Rotorring 302 einstellenden Luftspalt 12 bereitgestellt. In Schritt 1102 wird der Statorring 202 relativ zu dem Rotorring 302 durch Anordnen von mindestens drei Hydraulikkissen in dem Luftspalt 12 fixiert. Danach wird in Schritt 1104 der Statorring 202 mit einer Tragstruktur einer Windenergieanlage 100 gekoppelt. Darüber hinaus wird der Rotorring 302 mit einem aerodynamischen Rotor 106 der Windenergieanlage 100 gekoppelt. In Schritt 1106werden die Hydraulikkissen entfernt, sodass der Generator 1 betriebsbereit ist.

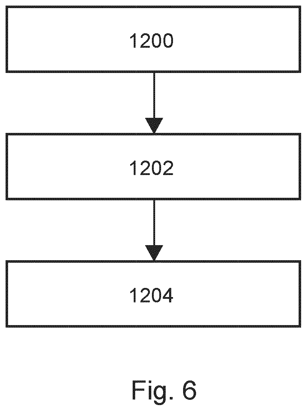

Figur 6 zeigt eine schematische Darstellung eines Verfahrens zur Montage eines Generators 1. In Schritt 1200 werden ein Statorring 202 und ein Rotorring 302, zwischen denen sich bei bestimmungsgemäßer Anordnung ein Luftspalt 12 einstellt, bereitgestellt. Der Rotorring 302 umfasst im Wesentlichen unmagnetisierte Magneteinheiten 330, 332. In Schritt 1202 werden der Statorring 202 und der Rotorring 302 an der Gondel 104 angeordnet. In Schritt 1204 werden die Magneteinheiten 330, 332 magnetisiert.

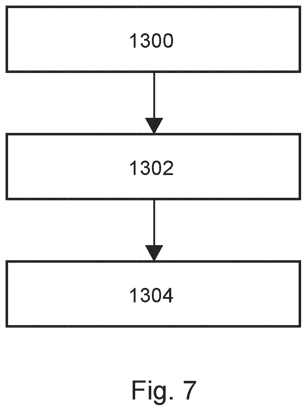

Figur 7 zeigt eine schematische Darstellung eines Verfahrens zur Montage eines Generators 1. In Schritt 1300 wird eine Wartungsvorrichtung 500 zum Bewegen einer Generatorkomponente, insbesondere einer Spuleneinheit 230, 232, 234 und/oder einer Magneteinheit 330, 332, bereitgestellt. In Schritt 1302 wird die Wartungsvorrichtung 500 mit der Generatorkomponente gekoppelt. Die Wartungsvorrichtung 500 erreicht die Generatorkomponente durch eine Wartungsöffnung 311 an einem Generatoraußenring 302, 202. Im Schritt 1304 wird die Generatorkomponente gelöst und bewegt, insbesondere aus dem Generator 1 ausgebaut und außerhalb des Generators 1 weiterbewegt.

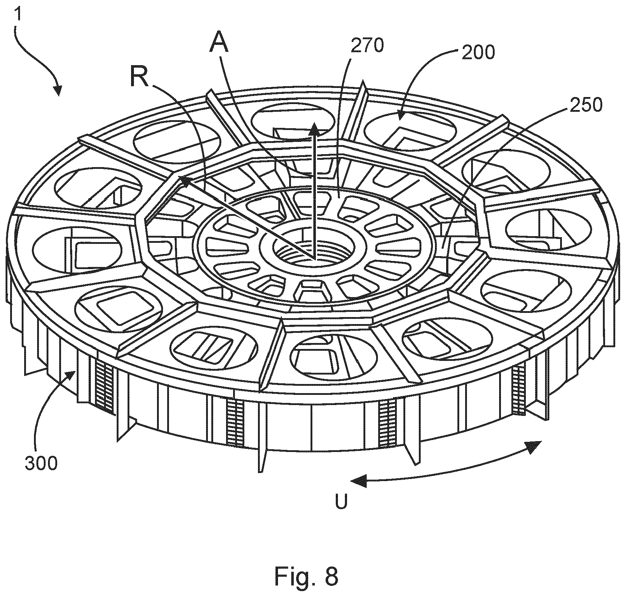

Figur 8 zeigt eine schematische, dreidimensionale Ansicht einer beispielhaften Ausführungsform eines Generators 1. Der Generator 1 erstreckt sich in Umfangsrichtung U, in radialer Richtung R und in axialer Richtung A. Im Betrieb rotiert der aus Rotorsegmenten 300 zusammengesetzte Rotorring um eine Rotationsachse, die parallel zur axialen Richtung A ausgerichtet ist. Der aus Statorsegmenten 200 zusammengesetzte Statorring ist relativ zu dem Rotorring im Betrieb fest angeordnet. Diese feste Anordnung des Statorrings 202 erfolgt durch den Statorgrundkörper 270, der beispielsweise an einem Maschinengestell der Windenergieanlage 100 befestigt ist. Zwischen dem Statorgrundkörper 270 und einem im Folgenden noch näher erläuterten Rotorgrundkörper 370 ist eine Lagerung mit einer Lagereinheit 18 vorgesehen, sodass der Rotorring relativ zu dem Statorring drehbar ist.

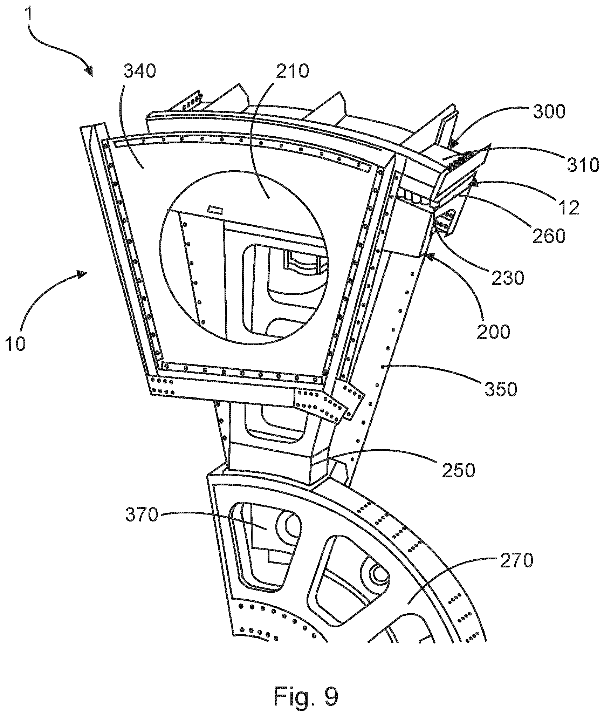

Figur 9 zeigt eine schematische, dreidimensionale Detailansicht des in Figur 8 gezeigten Generators. Das Generatorsegment 10 umfasst das Statorsegment 200 und das Rotorsegment 300. Das Statorsegment 200 und das Rotorsegment 300 sind voneinander beabstandet, sodass sich zwischen diesen ein Luftspalt 12 einstellt. Das Statorsegment 200 ist mittels einer Stator-Trageinheit 250 an dem Statorgrundkörper 270 angeordnet. Die Stator-Trageinheit 250 ist als Gitterstruktur ausgebildet und schweißtechnisch an dem Statorgrundkörper 270 befestigt.

Das Rotorsegment 300 ist mit einer Rotor-Trageinheit 350 an dem Rotorgrundkörper 370 angeordnet. Der Rotorgrundkörper 370 ist mit dem Statorgrundkörper 270 rotatorisch bewegbar gekoppelt. Dies kann beispielsweise mittels einer Lagereinheit 18 erfolgen. Das Statorsegment 200 weist den Stator-Segmentträger 210 auf. An dem Stator-Segmentträger 210 ist die Spuleneinheit 230 angeordnet. Die Spuleneinheit 230 weist die Spule 260 und die im Folgenden noch erläuterte Spulenträgerplatte 231 auf. Zur Versteifung des Rotorrings ist an dem Rotorsegment 300 ein Versteifungsblech 340 angeordnet.

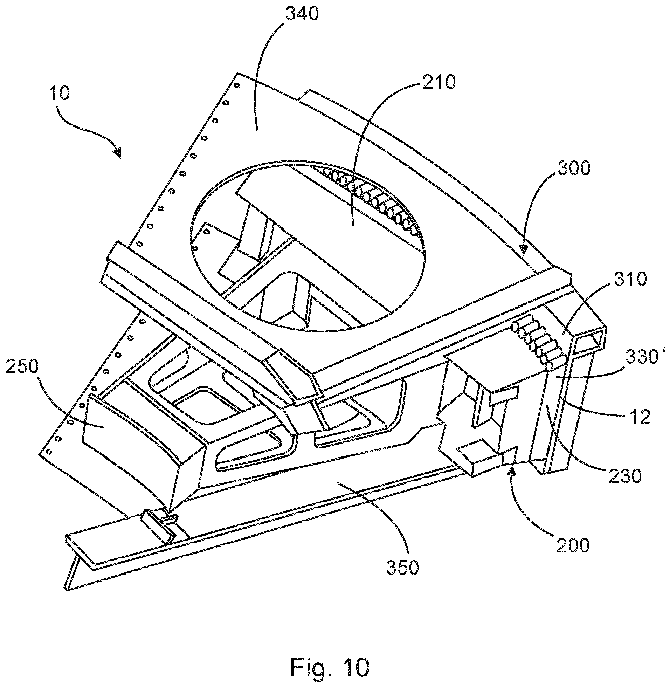

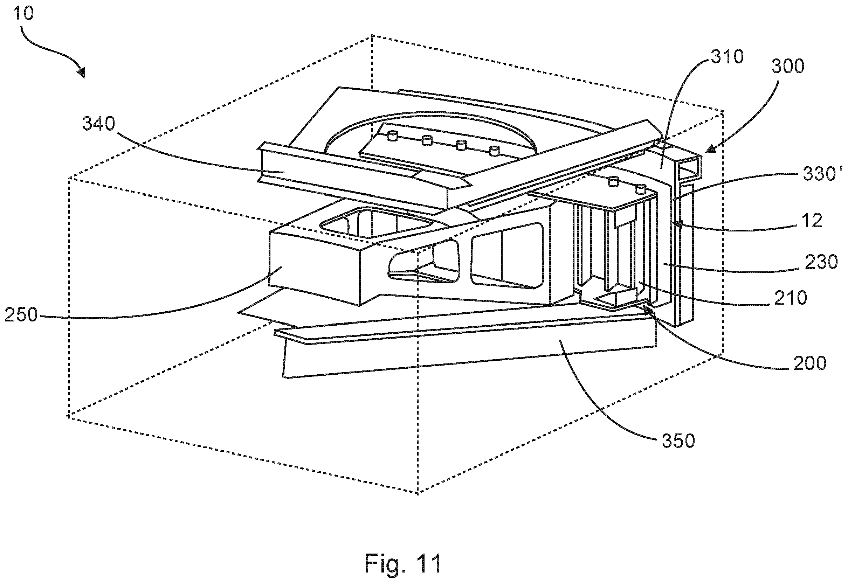

In den Figuren 10 und 11 ist die Gitterstruktur der Stator-Trageinheit 250 ersichtlich. Mit der insbesondere in Figur 11 gezeigten Stoßfläche der Stator-Trageinheit 250 wird diese schweißtechnisch an dem Statorgrundkörper 270 befestigt. Das derart zusammengesetzte Generatorsegment 10 weist vorzugsweise Befestigungselemente auf, sodass dieses mit im Wesentlichen gleichbleibendem Luftspalt 12 transportiert werden kann. Die derart zusammengesetzten Generatorsegmente 10 können dann am Aufstellort einer Windenergieanlage 100 aneinander angeordnet werden und somit einen Generator 1 ausbilden. Eine zusätzliche Einstellung des Luftspalts 12 entfällt somit, da dieser bereits zuvor eingestellt wurde.

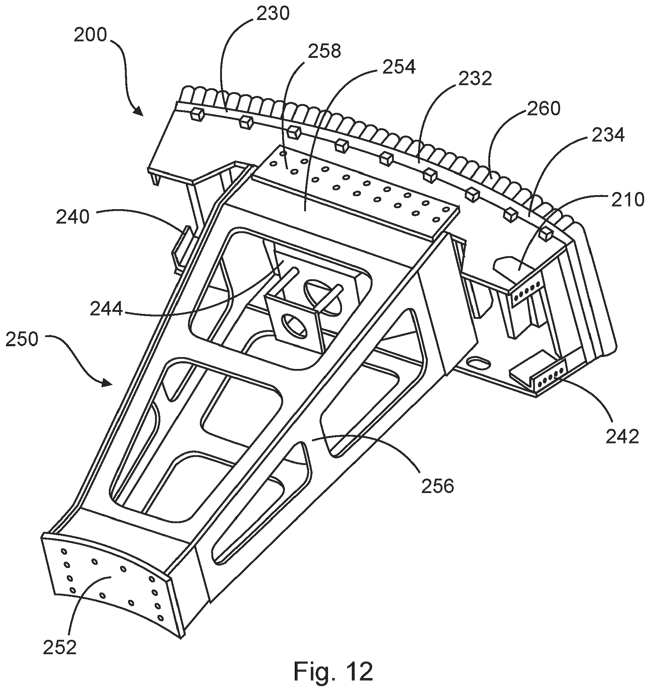

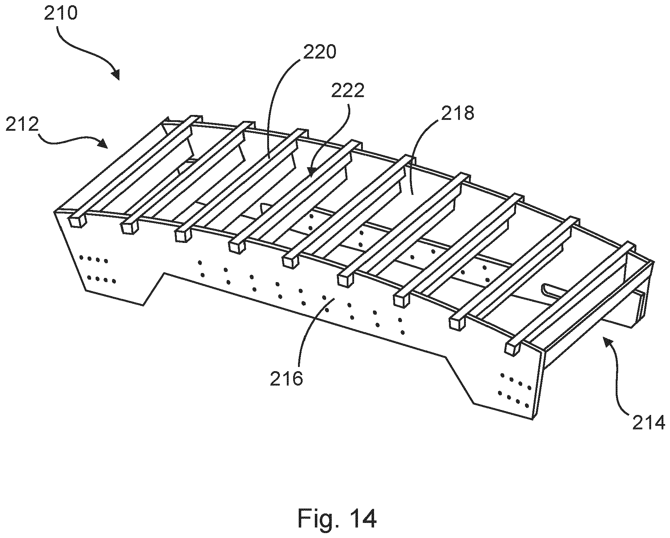

Figur 12 zeigt eine schematische, dreidimensionale Ansicht einer beispielhaften Ausführungsform eines Statorsegments 200. Das Statorsegment 200 umfasst den Stator-Segmentträger 210 mit der in Figur 14 gezeigten Stator-Außenumfangsfläche 222. An der Stator-Außenumfangsfläche 222 sind eine erste Spuleneinheit 230, eine zweite Spuleneinheit 232 und eine dritte Spuleneinheit 234 angeordnet. An den Spuleneinheiten 230, 232, 234 sind eine Vielzahl an Spulen angeordnet, wobei stellvertretend für alle Spulen eine Spule mit dem Bezugszeichen 260 versehen ist. Der Stator-Segmentträger weist Flanschelemente 240, 242 auf, die angeordnet und ausgebildet sind, um den Stator-Segmentträger 210 mit benachbarten Stator-Segmentträgern von benachbarten Statorsegmenten zu verbinden.

Auf der den Spuleneinheiten 230, 232, 234 abgewandten Seite des Stator-Segmentträgers 210 ist die Stator-Trageinheit 250 angeordnet. Die Stator-Trageinheit 250 ist mit einem Verbindungselement 258 mit dem Stator-Segmentträger 210 verbunden. Die StatorTrageinheit 250 weist hierfür einen distalen Flansch 254 auf, mit dem dieser an dem Stator-Segmentträger 210 angeordnet ist. Auf der gegenüberliegenden Seite weist die StatorTrageinheit 250 einen proximalen Flansch 252 auf. Dieser Flansch ist so angeordnet und ausgebildet, dass mit diesem Flansch 252 eine Verbindung mit einem Statorgrundkörper 270, insbesondere schweißtechnisch, ermöglicht wird. Die Stator-Trageinheit 250 weist eine Gitterstruktur 256 auf. Hierfür weist die Stator-Trageinheit 250 Gitterstreben auf.

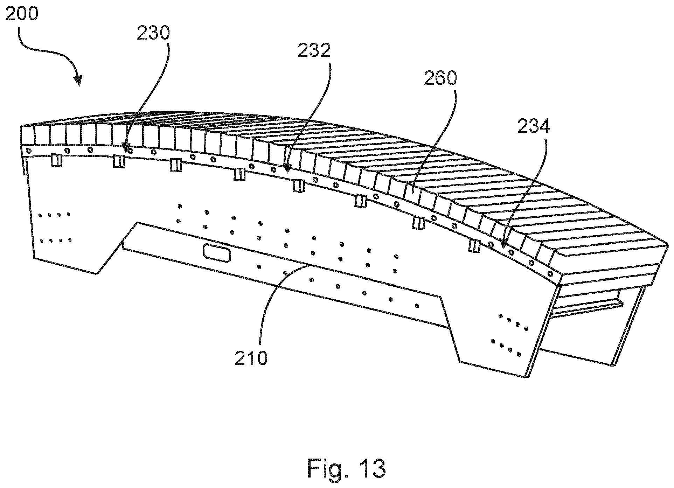

Figur 13 zeigt eine schematische, dreidimensionale Detailansicht des in Figur 12 gezeigten Statorsegments 200. Der Stator-Segmentträger 210 weist auf der insbesondere in Figur 14 gezeigten Stator-Außenumfangsfläche 222 die drei Spuleneinheiten 230, 232, 234 auf. Die Stator-Außenumfangsfläche 222 wird durch eine Vielzahl von Konturstreben 220 ausgebildet. Die Konturstreben 220 erstrecken sich zwischen einer ersten Statorträgerplatte 216 und einer zweiten Statorträgerplatte 218. Die Statorträgerplatten 216, 218 sind in axialer Richtung voneinander beabstandet und im Wesentlichen flächenparallel angeordnet.

Auf der der Stator-Außenumfangsfläche 222 zugewandten Seite weisen die Statorträgerplatten 216, 218 eine gewölbte Kontur auf, die die gewölbte Stator-Außenumfangsfläche 222 mit ausbilden. Der Stator-Segmentträger 210 erstreckt sich von einem ersten Ende 212 zu einem zweiten Ende 214. Zwischen diesen Enden 212, 214 erstrecken sich die Segmentträgerplatten 216, 218 mit ihrer Haupterstreckungsrichtung. Orthogonal hierzu erstrecken sich die Konturstreben 220 zwischen den Statorträgerplatten 216, 218.

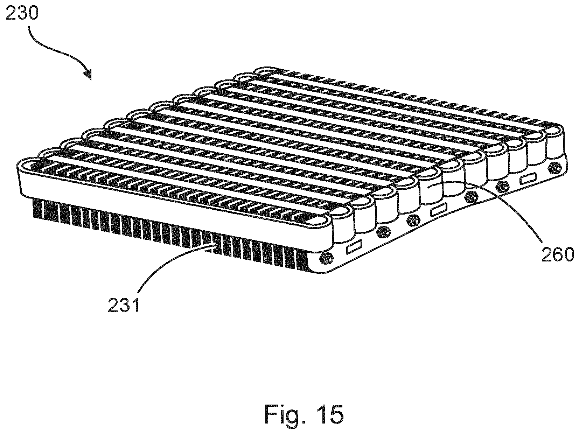

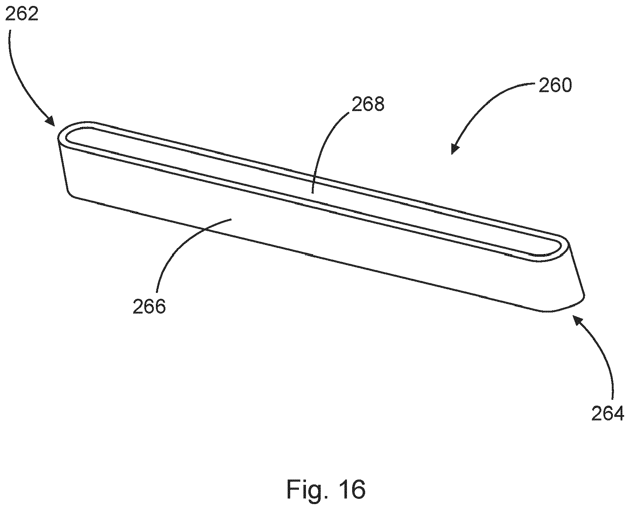

Figur 15 zeigt eine schematische, dreidimensionale Ansicht einer beispielhaften Ausführungsform einer Spuleneinheit 230. Die Spuleneinheit 230 weist insgesamt 12 Spulen 260 auf, die parallel zueinander an der Spulenträgerplatte 231 angeordnet sind. Die in Figur 16 gezeigte Spule 260 erstreckt sich von einem ersten Spulenende 262 zu einem zweiten Spulenende 264. Zwischen diesen Enden 262, 264 erstreckt sich die Spule mit einem ersten und einem zweiten Spulenschenkel 266, 268. An den Enden 262, 264 ist die Spule halbkreisförmig ausgebildet, wobei eine halbkreisförmige Kontur jeweils die Enden der zwei Spulenschenkel 266, 268 miteinander verbindet.

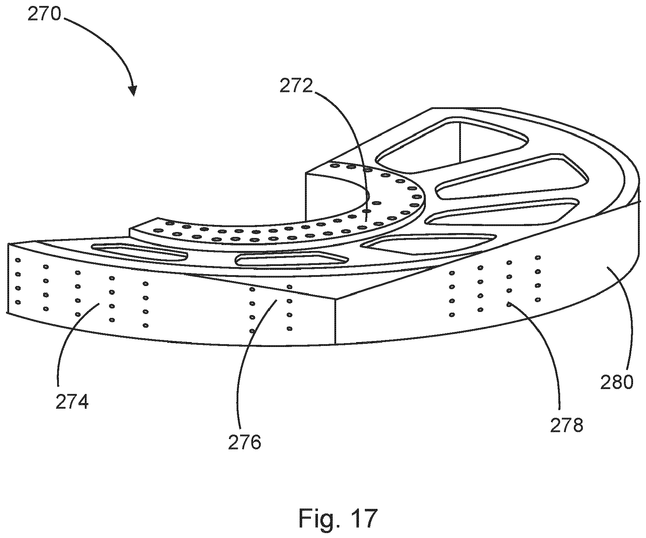

Figur 17 zeigt eine schematische, dreidimensionale Ansicht einer beispielhaften Ausführungsform eines Statorgrundkörpers 270. Der Statorgrundkörper 270 weist einen inneren Statorflansch 272 auf, der angeordnet und ausgebildet ist, um den Statorgrundkörper 270 mit einem Maschinenträger zu verbinden. An der radialen Außenumfangsfläche weist der Statorgrundkörper 270 die Verbindungsstellen 274 bis 280 auf. Die Verbindungsstellen 274 bis 280 sind jeweils dafür angeordnet und ausgebildet, damit an diesen eine Stator-Trageinheit 250 jeweils schweißtechnisch angeordnet werden kann.

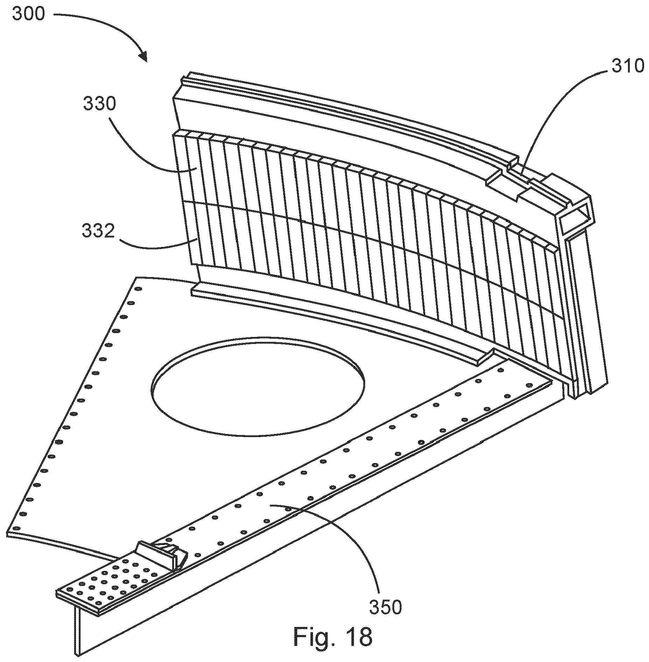

Figur 18 zeigt eine schematische, dreidimensionale Ansicht einer beispielhaften Ausführungsform eines Rotorsegments 300. Das Rotorsegment 300 weist den Rotor-Segmentträger 310 auf. An dem Rotor-Segmentträger 310 ist eine Vielzahl an Magneteinheiten 330, 332 an der Rotor-Innenumfangsfläche angeordnet. Durch diese Anordnung der Magneteinheiten 330, 332 an der Rotor-Innenumfangsfläche des Rotor-Segmentträgers 310 sind diese korrespondierend zu den Spuleneinheiten 230, 232, 234 des Statorsegments 200 angeordnet.

Das Rotorsegment 300 weist ferner eine Rotor-Trageinheit 350 auf, die angeordnet und ausgebildet ist, um das Rotorsegment 300 mit einem Rotorgrundkörper 370 zu verbinden. Zur Erhöhung der Festigkeit des Rotorsegments 300 ist zwischen der Rotor-Trageinheit 350 und dem Rotor-Segmentträger 310 ein Versteifungsblech 340 angeordnet.

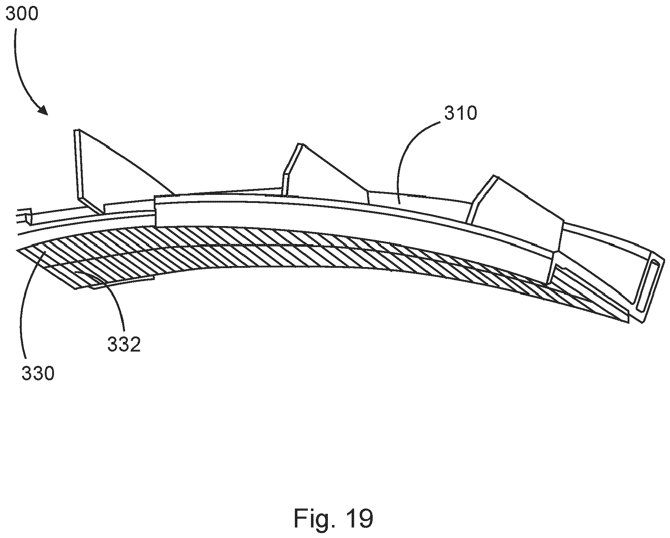

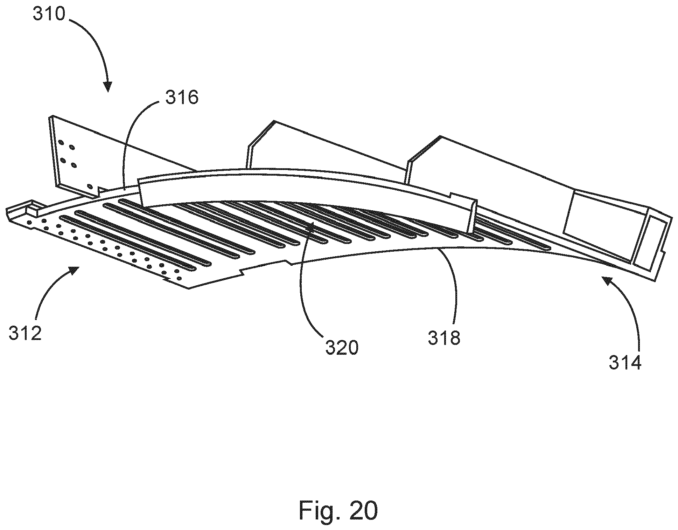

Figur 19 zeigt eine schematische, dreidimensionale Detailansicht des in Figur 18 gezeigten Rotorsegments 300. Insbesondere der Figur 20 ist zu entnehmen, dass der Rotor-Segmentträger 310 sich von einem ersten Ende 312 hin zu einem zweiten Ende 314 erstreckt. Orthogonal zu dieser gewölbten Erstreckung zwischen dem ersten Ende 312 und dem zweiten Ende 314 erstreckt sich der Rotor-Segmentträger 310 von einer ersten Kante 316 hin zu einer zweiten Kante 318. Die Umfangsrichtung beim Rotor-Segmentträger 310 ist entlang der Umfangsfläche zwischen dem ersten Ende 312 und zweiten Ende 314 ausgerichtet. Die axiale Richtung des Rotor-Segmentträgers 310 ist zwischen der ersten Kante 316 und der zweiten Kante 318 gerichtet. Insbesondere in der Figur 19 ist gezeigt, dass die zwei Magneteinheiten 330, 332 in axialer Richtung benachbart zueinander angeordnet sind.

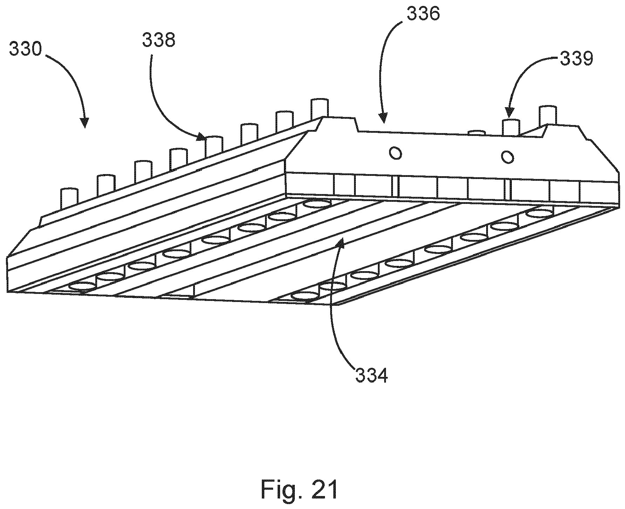

Figur 21 zeigt eine schematische, dreidimensionale Ansicht einer beispielhaften Ausführungsform einer Magneteinheit 330. Die Magneteinheit 330 weist eine Magnetvorderfläche 334 auf, die im bestimmungsgemäßen Betrieb des Rotorsegments den Spuleneinheiten 230, 232, 234 zugewandt ist. An der Magnethinterfläche 236 ist eine erste Befestigungsreihe 338 und eine zweite Befestigungsreihe 339 vorgesehen. Die Befestigungsreihen 338, 339 weisen Befestigungselemente auf, die zur Befestigung der Magneteinheit 230 an dem Rotor-Segmentträger 310 vorgesehen sind.

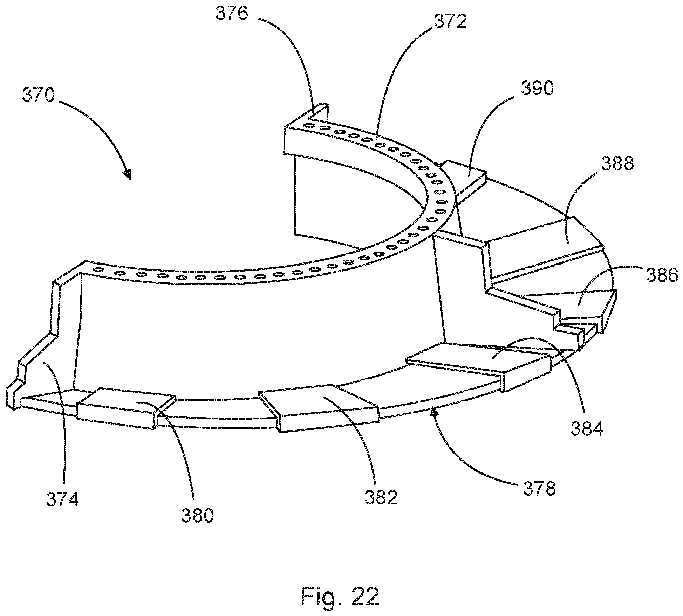

Figur 22 zeigt eine schematische, dreidimensionale Ansicht einer beispielhaften Ausführungsform eines Rotorgrundkörpers. Der Rotorgrundkörper 370 weist einen Rotorflansch 372 auf. Mit dem Rotorflansch 372 kann der Rotorgrundkörper 370 mit dem aerodynamischen Rotor 106 gekoppelt werden. Der Rotorgrundkörper 370 weist ferner den ersten Verbindungsflansch 374 und den zweiten Verbindungsflansch 376 auf. Die Verbindungsflansche 374, 376 sind vorgesehen, um den Rotorgrundkörper 370 mit einem weiteren Rotorgrundkörper zu verbinden, sodass ein ringförmiger Rotorgrundkörper ausgebildet wird. Der Rotorgrundkörper 370 weist darüber hinaus die Verbindungsstellen 380 bis 390 auf, an denen Rotor-Trageinheiten 350 von mehreren Rotorsegmenten 300 angeordnet werden.

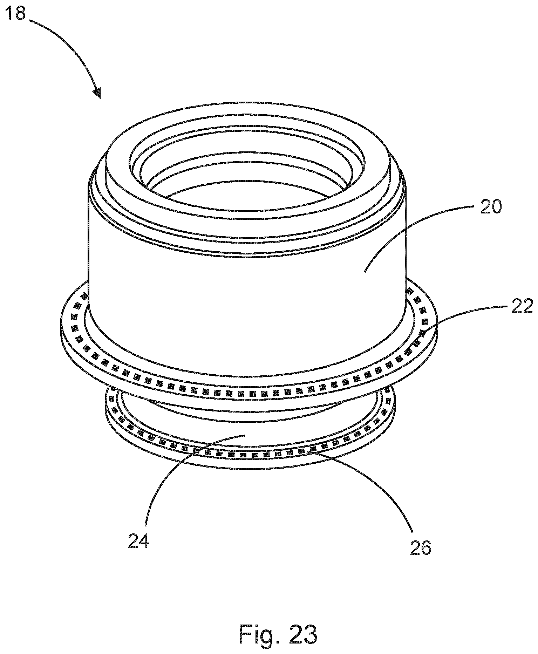

Figur 23 zeigt eine schematische Ansicht einer beispielhaften Ausführungsform eines Lagers 18. Das Lager 18 weist zwei miteinander gekoppelte und drehbar zueinander angeordnete Lagerringe 20, 24 auf. Der erste Lagerring 20 weist den Rotorgrundkörperflansch 22 auf. An dem Rotorgrundkörperflansch 22 wird der Rotorgrundkörper 370 mit dem Rotorflansch 372 angeordnet und beispielsweise mittels Schrauben befestigt. Der zweite Lagerring 24 weist den Statorgrundkörperflansch 26 auf. An dem Statorgrundkörperflansch 26 wird der Statorgrundkörper 270 angeordnet und beispielsweise mittels Schrauben befestigt. Durch das Lager 18 sind der Statorgrundkörper 270 und der Rotorgrundkörper 370 relativ zueinander drehbar. Infolgedessen sind auch die Rotorsegmente 300 relativ zu den Statorsegmenten 200 drehbar, sodass ein Generator ausgebildet wird, der elektrische Energie erzeugen kann.

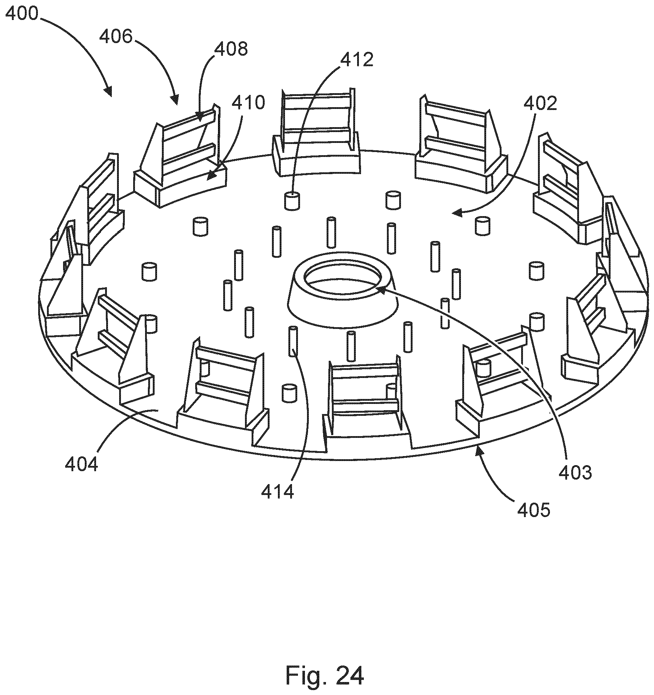

Figur 24 zeigt eine schematische Darstellung einer beispielhaften Ausführungsform einer Montagevorrichtung 400. Die Montagevorrichtung 400 weist die Montagegrundplatte 404 auf. Die Montagegrundplatte 404 bildet die Montagefläche 402 aus. In der Montagegrundplatte 404 ist eine Durchgangsöffnung 403 angeordnet.

Die Montagefläche 402 weist eine radial außenliegende Außenkante 405 auf. Angrenzend an diese Außenkante 405 weist die Montagevorrichtung 400 insgesamt 12 Montageanschläge 406 auf. Jeder Montageanschlag 406 weist eine erste Anschlagfläche 408 und eine zweite Anschlagfläche 410 auf. Die erste Anschlagfläche 408 wird durch zwei Querstreben ausgebildet. Die zweite Anschlagfläche 410 wird durch einen Basisgrundkörper des Montageanschlags 406 ausgebildet. Die erste Anschlagfläche 408 ist in radialer Richtung weiter vom Mittelpunkt der Montagefläche beabstandet als die zweite Anschlagfläche 410. Die Montagefläche 402 weist ferner eine Vielzahl an ersten Fixierstiften 412 auf, die kreisförmig in einem ersten Radialabstand vom Mittelpunkt der Montagefläche 402 angeordnet sind. Darüber hinaus weist die Montagefläche 402 eine Vielzahl an zweiten Fixierstiften 414 auf, die mit einem zweiten Radialabstand kreisförmig um den Mittelpunkt der Montagefläche 402 angeordnet sind, wobei dieser zweite Radialabstand geringer ist als der erste Radialabstand.

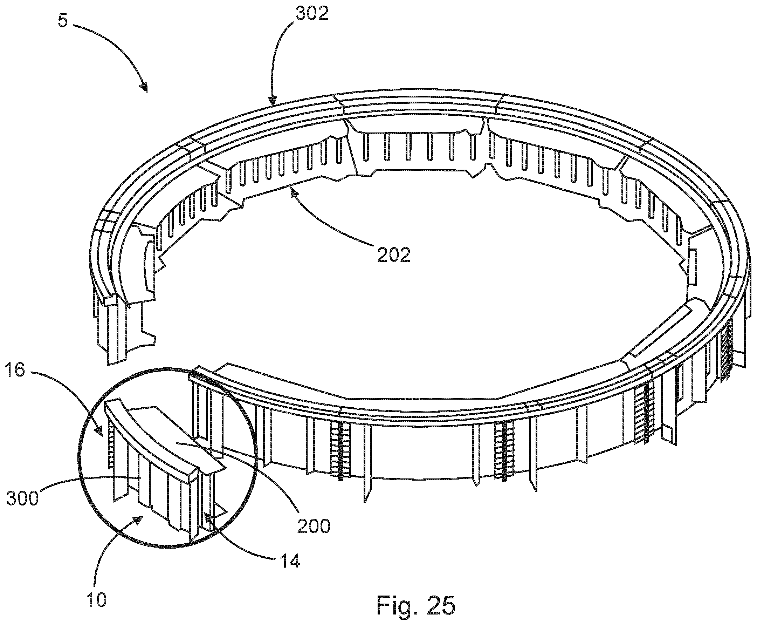

Figur 25 zeigt eine schematische, dreidimensionale Ansicht einer beispielhaften Ausführungsform eines Generatorringes 5. Es handelt sich vorliegend um einen Außenläufer, da der Rotorring 302 umfangsseitig außenliegend vom Statorring 202 angeordnet ist. Der Generatorring 5 umfasst den Statorring 202 und den Rotorring 302. Der Generatorring 5 ist aus insgesamt 12 Generatorsegmenten 10 zusammengesetzt. Jedes Generatorsegment 10 weist ein Statorsegment 200 und ein Rotorsegment 300 auf. Die Statorsegmente 200, die Rotorsegmente 300 und somit auch die Generatorsegmente 10 erstrecken sich von einer ersten Stirnseite 14 hin zu einer zweiten Stirnseite 16. Mit diesen Stirnseiten 14, 16 sind die Generatorsegmente 10, bzw. die Statorsegmente 200 und die Rotorsegmente 300, benachbart zu weiteren Segmenten 10, 200, 300 angeordnet. Dies ist insbesondere eine stirnseitige Anordnung.

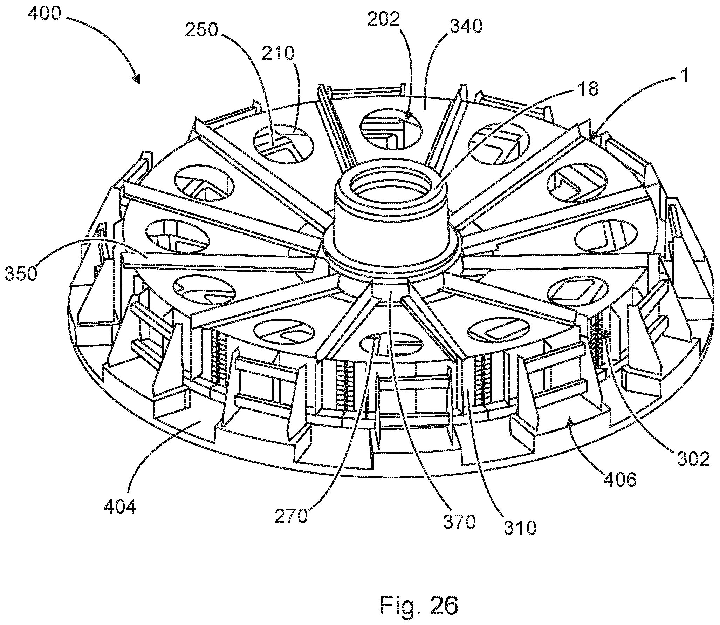

Figur 26 zeigt eine schematische, dreidimensionale Ansicht eines in der Montagevorrichtung 400 angeordneten Generators 1. In der Montagevorrichtung 400 ist der Generator 1 montiert. Der außenliegende Rotorring 302 liegt an den Anschlägen 406 an. Der Rotorring 302 umfasst Rotor-Segmentträger 310, die auf der nicht gezeigten Innenumfangsfläche Magneteinheiten 330, 332 umfassen. Der Rotorring 302 umfasst darüber hinaus Rotortrageinheiten 350 und Versteifungsbleche 340. Die Rotor-Segmentträger 310 sind über die Rotortrageinheiten 350 mit dem Rotorgrundkörper 370 gekoppelt. Der Rotorgrundkörper 370 ist mit dem Lager 18 verbunden, insbesondere über eine Schraubverbindung mit einem Flansch. Außerdem sind in der Figur 26 Teile des Stators zu erkennen, insbesondere mehrere Stator-Segmentträger 210, die über eine Statortrageinheit 250 mit einem Statorgrundkörper 270 gekoppelt sind.

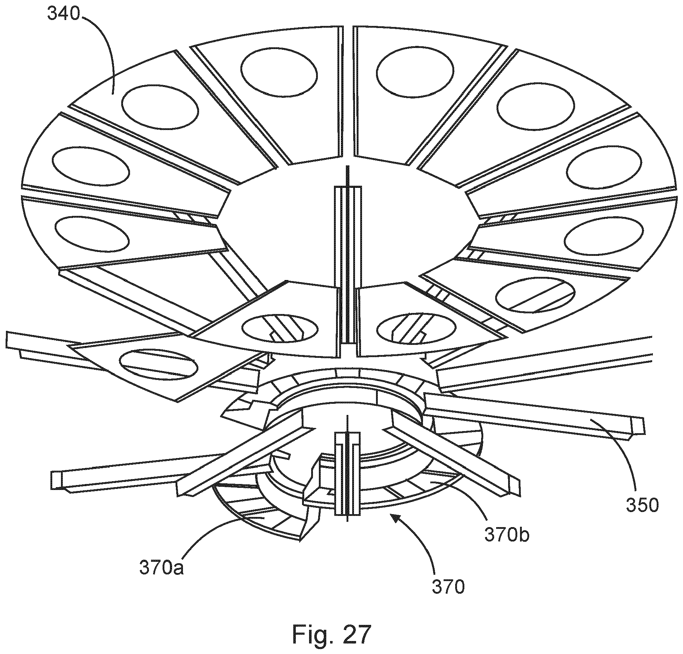

Figur 27 zeigt eine schematische Explosionszeichnung von Komponenten einer beispielhaften Ausführungsform eines Rotorringes. Es sind insbesondere die weiteren Komponenten des Rotorringes 302 gezeigt, nämlich das Versteifungsblech 340 und die Rotortrageinheiten 350. Darüber hinaus ist der Aufbau des Rotorgrundkörpers 370 gezeigt, dieser umfasst einen ersten Rotorgrundkörperabschnitt 370a und einen zweiten Rotorgrundkörperabschnitt 370b, sodass der Rotorgrundkörper 370 segmentiert ausgeführt ist.

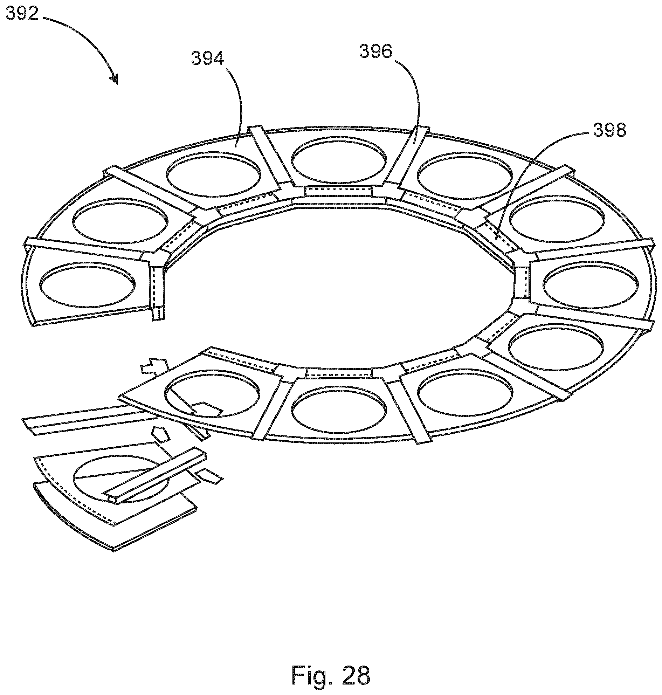

Figur 28 zeigt eine schematische, dreidimensionale Ansicht einer beispielhaften Ausführungsform einer Versteifungseinheit. Die Versteifungseinheit 392 ist vorzugsweise auf der Seite des Rotorrings angeordnet, die der Seite, an der die Versteifungsbleche 340 angeordnet sind, gegenüberliegt. die Versteifungseinheit 392 umfasst mehrere Versteifungselemente 394, die nebeneinander zu einem Ring angeordnet sind. Zwischen jedem Versteifungselement 394 ist eine Versteifungsstrebe 396 angeordnet, deren Haupterstreckungsrichtung radial verläuft. An einer inneren Umfangsfläche der Versteifungselemente 394 ist ein Versteifungsring 398 angeordnet. Die Versteifungsstreben 396 sind ebenfalls an dem Versteifungsring 398 angeordnet.

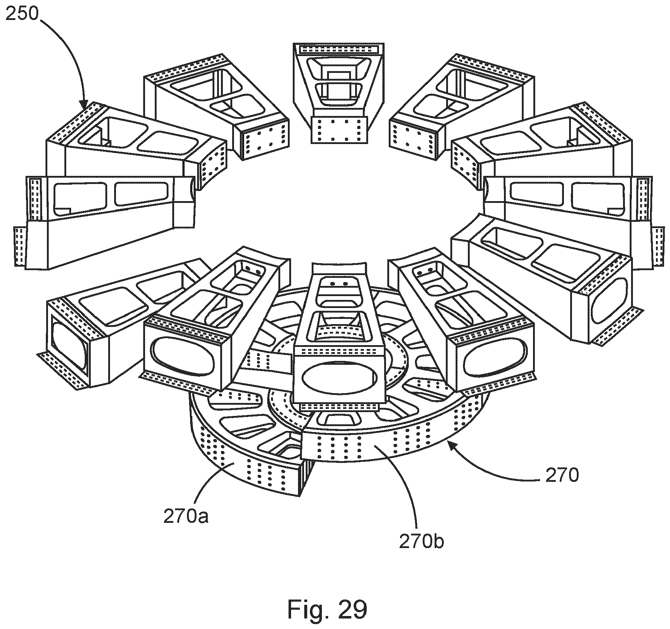

Figur 29 zeigt eine schematische Explosionszeichnung von Komponenten einer beispielhaften Ausführungsform eines Statorringes 202. Es ist ein segmentierter Statorgrundkörper 270 gezeigt, der einen ersten Statorgrundkörperabschnitt 270a und einen zweiten Statorgrundkörperabschnitt 270b umfasst. Der Statorgrundkörper 270 weist eine Außenumfangsfläche auf, an der die Statortrageinheiten 250 schweißtechnisch befestigt werden können. Alternativ kommen auch andere Befestigungsverfahren infrage.

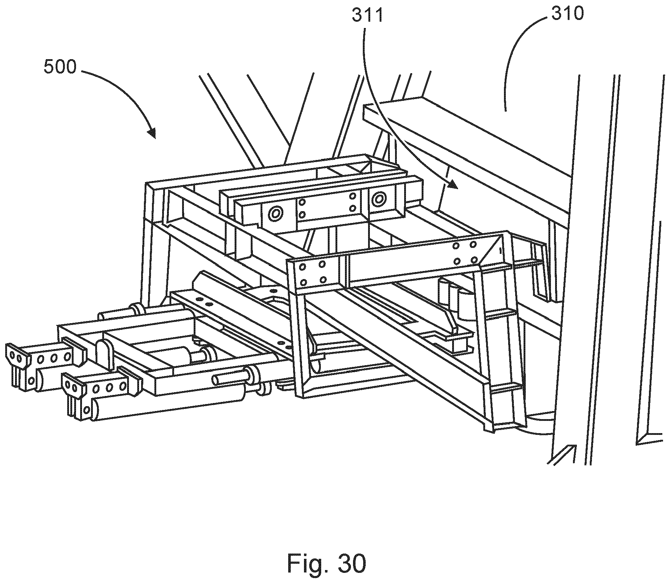

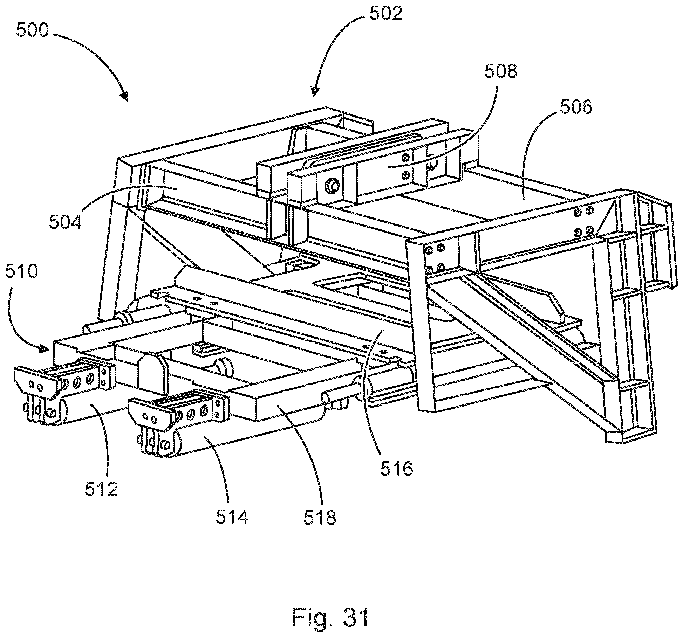

Figur 30 zeigt eine schematische Anordnung einer Wartungsvorrichtung an einem Rotorsegment 310. Es ist ein Rotor-Segmentträger 310 gezeigt, der eine Wartungsöffnung 311 aufweist. Durch die Wartungsöffnung 311 sind die Magneteinheiten 330, 332 und/oder die Spuleneinheiten 230, 232, 234 erreichbar. Insbesondere sind diese von außen erreichbar und austauschbar. Für den Austausch der Spuleneinheiten 230, 232, 234 und/oder der Magneteinheiten 330, 332 ist eine Wartungsvorrichtung 500 vorgesehen. Die in Figur 31 näher gezeigte Serviceeinrichtung 500 weist ein Grundgestell 502 auf. Das Grundgestell 502 weist einen ersten Querbalken 504 und einen zweiten Querbalken 506 auf, die mittels eines Längsbalkens 508 miteinander verbunden sind.

Die Wartungsvorrichtung 500 weist darüber hinaus die Bewegungseinheit 510 auf. Die Bewegungseinheit 510 weist eine erste Antriebseinheit 512 und eine zweite Antriebseinheit 514 auf, die vorliegend als ausfahrbare Zylinder ausgebildet sind. Die Bewegungseinheit 510 weist darüber hinaus eine Greifeinheit 518 auf.

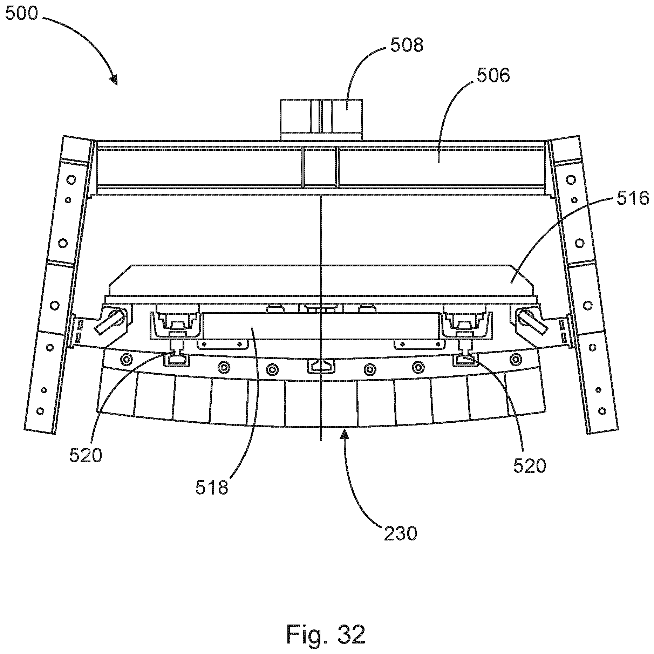

Die Koppeleinheit 518 ist in Figur 32 näher gezeigt. Die Koppeleinheit weist den Koppelzapfen 520 auf. Die Koppelzapfen 520 sind derart ausgebildet, dass diese mit einer Spuleneinheit 230 gekoppelt werden können, um diese zu bewegen.

### BEZUGSZEICHEN

- 1: Generator
- 5: Generatorring
- 10: Generatorsegment
- 12: Luftspalt
- 14: erste Stirnseite
- 16: zweite Stirnseite
- 18: Lagereinheit
- 20: erster Lagerring
- 22: Rotorgrundkörperflansch
- 24: zweiter Lagerring
- 26: Statorgrundkörperflansch
- 100: Windenergieanlage
- 102: Turm
- 104: Gondel
- 106: Rotor
- 108: Rotorblätter
- 110: Spinner
- 200: Statorsegment
- 202: Statorring
- 210: Stator-Segmentträger
- 212: erstes Ende
- 214: zweites Ende
- 216: erste Trägerplatte
- 218: zweite Trägerplatte
- 220: Konturstrebe
- 222: Stator-Außenumfangsfläche
- 230: erste Spuleneinheit
- 231: Spulenträgerplatte
- 232: zweite Spuleneinheit
- 234: dritte Spuleneinheit
- 240,242: Flanschelemente
- 250: Statortrageinheit
- 252: proximaler Flansch
- 254: distaler Flansch
- 256: Gitterstruktur
- 258: Verbindungselement
- 260: Spule
- 262: erstes Spulenende
- 264: zweites Spulenende
- 266: erster Spulenschenkel
- 268: zweiter Spulenschenkel
- 270: Statorgrundkörper
- 270a: erster Statorgrundkörperabschnitt
- 270b: zweiter Statorgrundkörperabschnitt
- 272: Statorflansch
- 274-280: Verbindungsstellen
- 300: Rotorsegment
- 302: Rotorring
- 310: Rotor-Segmentträger
- 311: Wartungsöffnung
- 312: erstes Ende
- 314: zweites Ende
- 316: erste Kante
- 318: zweite Kante
- 320: Rotor-Innenumfangsfläche
- 330: erste Magneteinheit
- 332: zweite Magneteinheit
- 334: Magnetvorderfläche
- 336: Magnethinterfläche
- 338: erste Befestigungsreihe
- 339: zweite Befestigungsreihe
- 340: Versteifungsblech
- 350: Rotor-Trageinheit
- 370: Rotorgrundkörper
- 370a: erster Rotorgrundkörperabschnitt
- 370b: zweiter Rotorgrundkörperabschnitt
- 372: Rotorflansch
- 374: erster Verbindungsflansch
- 376: zweiter Verbindungsflansch
- 378: Rotorflanschkragen
- 380-390: Verbindungsstellen
- 392: Versteifungseinheit
- 394: Versteifungselement
- 396: Versteifungsstrebe
- 398: Versteifungsring
- 400: Montagevorrichtung
- 402: Montagefläche
- 403: Durchgangsöffnung
- 404: Montagegrundplatte
- 406: Montageanschlag
- 408: erste Anschlagfläche
- 410: zweite Anschlagfläche
- 412: erste Fixierstifte
- 414: zweite Fixierstifte
- 500: Wartungsvorrichtung
- 502: Grundgestell
- 504: erster Querbalken
- 506: zweiter Querbalken
- 508: Längsbalken
- 510: Bewegungseinheit
- 512: erste Antriebseinheit
- 514: zweite Antriebseinheit
- 516: Transporteinheit
- 518: Koppeleinheit
- 520: Koppelzapfen

## Patentansprüche

1. Verfahren zur Bereitstellung eines Generators (1) einer Windenergieanlage (100), umfassend die Schritte:
- Bereitstellen eines Generatorringes (5) durch stirnseitiges Anordnen von Statorsegmenten (200) zu einem Statorring (202) und stirnseitiges Anordnen von Rotorsegmenten (300) zu einem Rotorring (302), wobei jeweils ein Statorsegment (200) umfangsseitig benachbart zu einem zugeordneten Rotorsegment (300) angeordnet wird, sodass mindestens zwei Generatorsegmente (10) jeweils umfassend ein Statorsegment (200) und ein Rotorsegment (300) ausgebildet werden,
- Einstellen eines Luftspaltes (12), insbesondere mit einer vordefinierten Dicke, zwischen dem Statorring (202) und dem Rotorring (302) und Fixieren des Statorsegments (200) und des Rotorsegments (300) eines jeden Generatorsegments (10),
- Demontage des Generatorringes (5) derart, dass die Verbindung zwischen den Generatorsegmenten (10) gelöst wird und die relative Position des Statorsegments (200) zu dem zugeordneten Rotorsegment (300) eines jeden Generatorsegments (10) im Wesentlichen unverändert bleibt.

2. Verfahren nach Anspruch 1, umfassend den Schritt:
- Anordnen von Passstiften zum Fixieren der Statorsegmente (200) und der Rotorsegmente (300) eines jeden Generatorsegments (10).

3. Verfahren nach einem der vorherigen Ansprüche, umfassend die Schritte:
- Bereitstellen einer Montagevorrichtung (400),
- Anordnen von mindestens zwei Generatorsegmenten (10) an der Montagevorrichtung (400) und Verbinden der Generatorsegmente (10).

4. Verfahren nach einem der vorherigen Ansprüche, wobei
- die Montagevorrichtung (400) eine im Wesentlichen kreisförmige Montagefläche (402) und mindestens einen umfangsseitig an der Montagefläche (402) angeordneten Montageanschlag (406) zum Anlegen eines Generatorsegments (10) aufweist, und umfassend den Schritt:
- Anordnen eines Generatorsegments (10) an dem Montageanschlag (406).

5. Verfahren nach einem der vorherigen Ansprüche, wobei
- die Anzahl der Montageanschläge (406) der Montagevorrichtung (400) der Anzahl an anzuordnenden Generatorsegmenten (10) entspricht und bei der Anordnung der Generatorsegmente (10) jedes Generatorsegment (10) an einem Montageanschlag (406) anliegt, und/oder
- das Verfahren den Schritt umfasst: Anordnen der Generatorsegmente (10) jeweils an einem Montageanschlag (406).

6. Verfahren nach einem der vorherigen Ansprüche, umfassend die Schritte:
- Anordnen einer Statorbasisstruktur und Verbinden der Statorbasisstruktur mit den Statorsegmenten (200), und/oder
- Anordnen einer Rotorbasisstruktur und Verbinden der Rotorbasisstruktur mit den Rotorsegmenten (300).

7. Verfahren nach einem der vorherigen Ansprüche, wobei
- die Statorbasisstruktur einen Statorgrundkörper (270) und/oder eine Statortrageinheit (250) umfasst, wobei vorzugsweise der Statorgrundkörper (270) Ringschreiben-förmig ausgebildet ist und/oder in Umfangsrichtung segmentiert ist, und/oder die Statortrageinheit (250) eine Gitterstruktur aufweist, und/oder
- die Rotorbasisstruktur einen Rotorgrundkörper (370) und/oder eine Rotortrageinheit (350) umfasst, wobei vorzugsweise der Rotorgrundkörper (370) Ringschreiben-förmig ausgebildet ist und/oder in Umfangsrichtung segmentiert ist, und/oder die Rotortrageinheit (350) eine Gitterstruktur aufweist.

8. Verfahren nach einem der vorherigen Ansprüche, umfassend den Schritt:
- Koppeln der Statorbasisstruktur und/oder der Rotorbasisstruktur mit einer Lagereinheit (18), sodass die Statorbasisstruktur und die Rotorbasisstruktur relativ zueinander drehbar sind.

9. Verfahren nach dem vorherigen Anspruch, umfassend den Schritt:
- Fixieren des Statorrings (202) relativ zu dem Rotorring (302), insbesondere in radialer Richtung, durch Anordnen von mindestens drei Hydraulikkissen in dem Luftspalt (12).

10. Verfahren zur Montage eines Generators (1) einer Windenergieanlage (100), umfassend die Schritte:
- Bereitstellen eines Generators (1) mit einem Statorring (202) und einem Rotorring (302) mit einem sich zwischen dem Statorring (202) und dem Rotorring (302) einstellenden Luftspalt (12),
- Fixieren des Statorrings (202) relativ zu dem Rotorring (302) durch Anordnen von mindestens drei Hydraulikkissen in dem Luftspalt (12),
- Koppeln des Statorrings (202) mit einer Tragstruktur einer Windenergieanlage (100) und Koppeln des Rotorrings (302) mit einem aerodynamischen Rotor (106) der Windenergieanlage (100), und
- Entfernen der Hydraulikkissen.

11. Verfahren zur Montage eines Generators (1) an einer Gondel einer Windenergieanlage (100), umfassend die Schritte:
- Bereitstellen eines Statorrings (202) und eines Rotorrings (302) zwischen denen sich bei bestimmungsgemäßer Anordnung ein Luftspalt (12) einstellt, wobei der Rotorring (302) im Wesentlichen unmagnetisierte Magneteinheiten umfasst,
- Anordnen des Statorrings (202) und des Rotorrings (302) an der Gondel, und
- Magnetisierung der Magneteinheiten.

12. Verfahren zur Wartung eines Generators (1) einer Windenergieanlage (100), umfassend die Schritte:
- Bereitstellen einer Wartungsvorrichtung (500) zum Bewegen einer Generatorkomponente, insbesondere einer Spuleneinheit (230, 232, 234) und/oder einer Magneteinheit (330, 332),
- Kopplung der Wartungsvorrichtung (500) mit der Generatorkomponente, wobei die Wartungsvorrichtung (500) die Generatorkomponente durch eine Wartungsöffnung (311) an einem Generatoraußenring, beispielsweise einem Statorring (202) oder einem Rotorring (302), erreicht,
- Lösen und Bewegen der Generatorkomponente durch die Wartungsöffnung (311) hindurch mittels der Wartungsvorrichtung.

13. Montagevorrichtung (400) zur Montage von Generatorsegmenten (10), umfassend
- eine Basiseinheit (404) mit einer kreisförmigen Montagefläche (402),
- mindestens einen umfangsseitig an der Montagefläche (402) angeordneten Montageanschlag (406) zum Anlegen eines Generatorsegments (10), wobei vorzugsweise mindestens zwei, insbesondere 12, Montageanschläge (406) umfangsseitig an der Montagefläche (402) angeordnet sind.

14. Wartungsvorrichtung zum Austausch einer Spuleneinheit an einem Statorsegment und/oder einer Magneteinheit an einem Rotorsegment, umfassend
- eine an einem Grundgestell (502) angeordnete Bewegungseinheit (510), wobei die Bewegungseinheit (510) eine Antriebseinheit (512, 514) aufweist, wobei die Antriebseinheit (512, 514) eingerichtet ist, die Bewegungseinheit (510) relativ zu dem Grundgestellt zu bewegen,
- eine an der Bewegungseinheit angeordnete Koppeleinheit (518), die eingerichtet ist, durch eine Wartungsöffnung in dem Statorsegment und/oder in dem Rotorsegment hindurchzureichen und die zur Kopplung mit der Spuleneinheit und/oder der Magneteinheit eingerichtet ist, wobei die Koppeleinheit (518) und die Bewegungseinheit (510) derart eingerichtet sind, die Spuleneinheit und/oder die Magneteinheit durch die Wartungsöffnung hindurch zu bewegen.
